# EUROPÄISCHE PATENTSCHRIFT

(11) **EP 3 945 617 B1**
(45) Veröffentlichungstag und Bekanntmachung des Hinweises auf die Patenterteilung: **23.04.2025**
(21) Anmeldenummer: 20188156.2
(22) Anmeldetag: 28.07.2020
(51) Int. Cl.: H01M 10/04, H01M 10/0587

(54) **ELEKTROCHEMISCHE ENERGIESPEICHERZELLE**
ELECTROCHEMICAL ENERGY STORAGE CELL
ÉLÉMENT D'ACCUMULATEUR D'ÉNERGIE ÉLECTROCHIMIQUE

(43) Veröffentlichungstag der Anmeldung: 02.02.2022
(73) Patentinhaber: VARTA Microbattery GmbH, 73479 Ellwangen Jagst (DE)
(72) Erfinder: HALD, Rainer, 73479 Ellwangen (DE); SCHREIBER, Werner, 38527 Meine (DE)
(74) Vertreter: Ostertag & Partner Patentanwälte mbB

(56) Entgegenhaltungen:
- EP-A2- 2 693 523
- WO-A1-2010/089152
- US-A1- 2003 134 184
- US-A1- 2018 261 805

## Beschreibung

Die vorliegende Erfindung betrifft eine elektrochemische Energiespeicherzelle mit einem zylindrischen Gehäuse und einem hohlzylindrisch geformter Wickelverbundkörper sowie ein Verfahren zur Herstellung einer derartigen elektrochemischen Energiespeicherzelle.

Unter einer elektrochemischen Energiespeicherzelle im Sinne der vorliegenden Anmeldung wird eine elektrochemische Zelle verstanden, die mindestens eine positive und mindestens eine negative Elektrode, welche durch einen Separator voneinander getrennt sind, umfasst, und die elektrische Energie aufnehmen, speichern und bei Bedarf abgeben können. Bei der Aufnahme (Ladung der Zelle) und bei der Abgabe (Entladung der Zelle) der elektrischen Energie findet jeweils eine elektrochemische Reaktion statt, welche sich aus zwei elektrisch miteinander gekoppelten, aber räumlich voneinander getrennten Teilreaktionen zusammensetzt. Eine bei vergleichsweise niedrigerem Redoxpotential stattfindende Teilreaktion läuft an der negativen Elektrode ab, eine bei vergleichsweise höherem Redoxpotential an der positiven Elektrode. Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zum Zwecke des Ladungsausgleichs zu einem der Elektrodenreaktion entsprechenden Ionenstrom innerhalb der elektrochemischen Zellen. Dieser Ionenstrom durchquert den Separator und wird durch einen ionenleitenden Elektrolyten gewährleistet.

In sekundären (wieder aufladbaren) elektrochemischen Energiespeicherzellen ist die Entladereaktion reversibel, es besteht also die Möglichkeit, die bei der Entladung erfolgte Umwandlung chemischer Energie in elektrische Energie umzukehren.

Werden im Zusammenhang mit sekundären elektrochemischen Energiespeicherzellen die Begriffe "Anode" und "Kathode" benutzt, benennt man die Elektroden in der Regel entsprechend ihrer Entladefunktion. Die negative Elektrode in solchen Zellen ist also die Anode, die positive Elektrode die Kathode.

Oftmals werden in Energiespeicherzellen die Elektroden und Separatoren in Form von Verbundkörpern bereitgestellt. Bei einem solchen Verbundkörper kann es sich um einen Zellenstapel (stack), aus mehreren Zellen handeln. Meist weist der Verbundkörper aber eine Struktur aus gewickelten Elektroden und Separatoren auf (Wickelverbundkörper).

In den Verbundkörpern liegen in der Regel positive und negative Elektroden, die bevorzugt als flache und beidseitig beschichtete Bänder ausgebildet sind, sowie Separatoren bzw. Separatorbänder flach aufeinander. Dabei können die Elektroden und Separatoren beispielsweise durch Lamination oder durch Verklebung miteinander verbunden sein. In der Regel umfassen Verbundkörper, unabhängig davon ob gewickelt oder nicht, die Sequenz positive Elektrode / Separator / negative Elektrode. Häufig werden Verbundkörper auch als sogenannte Bizellen mit den möglichen Sequenzen negative Elektrode / Separator / positive Elektrode / Separator / negative Elektrode oder positive Elektrode / Separator / negative Elektrode / Separator / positive Elektrode hergestellt.

Die bandförmigen Elektroden umfassen üblicherweise jeweils einen elektrisch leitenden Stromkollektor sowie elektrochemisch aktive Komponenten (oft auch als Aktivmaterialien bezeichnet) und elektrochemisch inaktive Komponenten. Die Stromkollektoren dienen dazu, die elektrochemisch aktiven Komponenten möglichst großflächig elektrisch zu kontaktieren. Sie bestehen üblicherweise aus bandförmigen, flächigen Metallsubstraten, beispielsweise aus Metallfolien oder aus einem Metallschaum oder aus einem Metallnetz oder einem Metallgitter oder einem metallisierten Vlies. Als Separatoren kommen für die Wickelverbundkörper insbesondere poröse Kunststofffolien in Frage, beispielsweise aus einem Polyolefin oder aus einem Polyetherketon.

Zur Herstellung von Elektroden für gewickelte Verbundkörper werden üblicherweise Pasten - umfassend die erwähnten elektrochemisch aktiven Komponenten sowie, als elektrochemisch inaktive Komponente, einen Elektrodenbinder (und gegebenenfalls ein Leitmittel) - in Form dünner Schichten auf die erwähnten Stromkollektoren aufgebracht, getrocknet und in die gewünschte Form gebracht. Üblicherweise werden die Schichten nach dem Trocknen gewalzt und gepresst.

Zur Herstellung des Wickelverbundkörpers werden so gebildete bandförmige positive und negative Elektroden gemeinsam mit einem oder mehreren bandförmigen Separatoren einer Wickelvorrichtung zugeführt und in dieser bevorzugt um eine Wickelachse herum spiralförmig aufgewickelt. Häufig werden die Elektroden und der Separator hierzu auf einen zylindrischen oder hohlzylindrischen Wickelkern aufgewickelt, der auf einem Wickeldorn sitzt und nach dem Wickeln im Wickelverbundkörper verbleibt. In anderen Ausgestaltungen kann die Wicklung auch ohne zentralen Wickelkern hergestellt werden, indem der Elektrodenverbund unmittelbar auf dem Wickeldorn gebildet wird. Nach einer meist vordefinierten Anzahl von Windungen (unter einer Windung wird hierbei jeder vollständige Umlauf beispielsweise einer Elektrode um den Wickelkern oder den Wickeldorn verstanden) wird der Wickelvorgang abgebrochen. In der Regel resultiert hieraus ein Wickelverbundkörper mit einer hohlzylindrischen Form, welcher einen inneren, axial ausgerichteten Hohlraum aufweist.

Die elektrische Kontaktierung der Elektroden des Wickelverbundkörpers kann beispielsweise über Ableiterfahnen erfolgen, die stirnseitig aus dem gebildeten Wickelverbundkörper austreten. Die Ableiterfahnen können an die Stromkollektoren geschweißt oder ein Teil derselben sein.

Bei elektrochemischen Energiespeicherzellen sind zylindrische Bauformen weit verbreitet, wobei sich in der Regel die Elektroden als Bestandteil eines hohlzylindrischen Wickelverbundkörpers im Innenraum eines zylindrischen Gehäuses befinden. Insbesondere kann es sich hierbei um zylindrische Rundzellen oder um Knopfzellen handeln.

Eine derartige Energiespeicherzelle geht beispielsweise aus der DE 20 2015 004 285 U1 hervor. Weiterhin ist der prinzipielle Aufbau von Knopfzellen mit durch spiralförmiges Aufwickeln von bandförmigen Elektroden und mindestens einem bandförmigen Separator gefertigten Wickeln auf Lithium-Ionen-Basis beispielsweise aus der WO 2010/146154 A2, der WO 2012/048995 A1 und der WO 2010/089152 A1 bekannt.

Aus der WO 2010/089152 A1 ist eine Energiespeicherzellen mit einem spiralförmig aufgebauten Wickelverbundkörper bekannt, wobei im Zentrum des Wickelverbundkörpers ein geschlitzter Wickelkern mit radial selbstexpandierenden Eigenschaften angeordnet ist.

Die US 2003/0134184 A1 offenbart in Figur 16 einen geschlitzten Wickelkern, der in einem axialen Hohlraum eines spiralförmig aufgebauten Wickelverbundkörpers einer Energiespeicherzelle angeordnet ist.

Problematisch bei derartigen Energiespeicherzellen mit einem spiralförmig aufgebauten Wickelverbundkörper sind lokal auftretende Unregelmäßigkeiten in der Spiralstruktur des Wickelverbundkörpers. Solche Unregelmäßigkeiten treten bevorzugt in Bereichen auf, in denen eines der gewickelten Elektrodenbänder endet und/oder eine plötzliche Dickenänderung eines der Elektrodenbänder auftritt. Jedes der Elektrodenbänder eines Wickels weist ein inneres Ende nahe dem Wickelkern oder dem axial ausgerichteten Hohlraum und ein äußeres Ende nahe der Außenseite des Wickels auf. Der Abstand der Elektrodenbänder zur Wickelachse vergrößert sich ausgehend von ihrem inneren Ende bis zu ihrem äußeren Ende über nahezu die gesamte Länge der Elektrodenbänder kontinuierlich. Eine Unregelmäßigkeit resultiert aus einer lokal auftretenden Diskontinuität bezüglich der Änderung des Abstands der Elektrodenbänder zur Wickelachse. Eine plötzliche Dickenänderung und/oder ein Endes eines Elektrodenbandes können bei Windungen benachbarter Elektrodenbänder plötzliche Richtungsänderungen bedingen, die lokal zu mechanischen Belastungen führen können, wenn die Elektrodenbänder beim Laden und Entladen volumetrischen Änderungen unterliegen, da hierbei auftretende Drücke nicht gleichmäßig verteilt werden. Problematisch ist hierbei insbesondere die Volumenexpansion der Anode bzw. der anodischen Beschichtung beim Laden der Energiespeicherzelle. Dadurch vergrößert sich insgesamt der Durchmesser des gesamten Wickelverbundkörpers, wodurch es zu einer Druckausübung durch den Wickelverbundkörper in Richtung des im Zentrum des Wickelverbundkörpers angeordneten Wickelkerns und auch in Richtung des den Wickelverbundkörper umgebenden Gehäuses kommt.

Die auftretenden mechanischen Belastungen können sich sehr nachteilig auf die Funktion der Energiespeicherzelle auswirken. Neben mechanischen Beschädigungen beispielsweise des Separators, die beispielsweise aus einer Kollision mit einem Stromkollektor resultieren können, kann es zu einer Behinderung des Ionenaustauschs oder im Fall von Lithium-Ionen-Zellen sogar zu einer Lithium-Plattierung kommen. Unter einer Lithium-Plattierung wird im Allgemeinen die Abscheidung und Ablagerung von metallischem Lithium auf der Anode verstanden. Dies kann zu einer Bildung von Dendriten führen, wobei diese Dendriten den Separator durchstoßen und somit einen Kurzschluss zwischen Anode und Kathode herbeiführen können.

Die Erfindung stellt sich demgegenüber die Aufgabe, eine verbesserte Energiespeicherzelle bereitzustellen, die die genannten Probleme adressiert. Insbesondere sollen beim Laden und Entladen auftretende ungleichmäßige Druckverteilungen innerhalb der Energiespeicherzelle vermieden werden, so dass es nicht zu einer Behinderung des Ionenaustauschs kommt und eine Lithium-Plattierung verhindert wird.

Diese Aufgabe wird durch eine elektrochemische Energiespeicherzelle mit den Merkmalen des Anspruchs 1 gelöst. Bevorzugte Ausführungsformen dieser Energiespeicherzelle sind Gegenstand der von Anspruch 1 abhängigen Ansprüche. Weiterhin wird diese Aufgabe durch ein Verfahren zur Herstellung einer elektrochemischen Energiespeicherzelle gemäß dem nebengeordneten Verfahrensanspruch gelöst, wobei sich vorteilhafte Ausgestaltungen dieses Verfahrens aus dem von diesem Anspruch abhängigen Anspruch ergeben.

Die erfindungsgemäße elektrochemische Energiespeicherzelle weist stets die folgenden Merkmale auf:
a. Die Energiespeicherzelle weist ein einen Innenraum einschließendes zylindrisches Gehäuse mit einer Ober- und einer Unterseite und einem dazwischen liegenden, umlaufenden Gehäusemantel auf.
b. Der Gehäusemantel weist eine innere Gehäusemantelfläche auf, die den Innenraum nach außen hin begrenzt.
c. In dem Innenraum ist ein hohlzylindrisch geformter Wickelverbundkörper angeordnet, der eine spiralförmige Struktur aus mindestens zwei spiralförmig um eine Wickelachse gewickelten Elektrodenbändern und mindestens einem zwischen den Elektrodenbändern angeordneten Separatorband aufweist.
d. Die Elektrodenbänder umfassen jeweils einen bandförmigen Stromkollektor mit einer beidseitigen Aktivmaterialbeschichtung.
e. Der hohlzylindrisch geformte Wickelverbundkörper umfasst zwei endständige Stirnseiten, eine umlaufende äußere Verbundkörpermantelfläche und eine umlaufende innere Verbundkörpermantelfläche.
f. Die innere Verbundkörpermantelfläche definiert einen axial ausgerichteten Hohlraum im Zentrum des Wickelverbundkörpers.
g. In dem axial ausgerichteten Hohlraum ist ein Wickelkern mit im Wesentlichen zylindrischer oder hohlzylindrischer Form angeordnet, der über eine Außenumfangsfläche verfügt, die flächig an der inneren Verbundkörpermantelfläche anliegt.
Weiterhin ist die erfindungsgemäße Energiespeicherzelle durch das folgende Merkmal gekennzeichnet:
h. der Wickelkern weist in mindestens einem Bereich der Außenumfangsfläche eine lokale Abweichung von der zylindrischen oder hohlzylindrischen Form auf.

In anderen Worten weist die Außenumfangsfläche des Wickelkerns mindestens eine von einer Zylinderform oder Hohlzylinderform abweichende Anpassung oder Veränderung in ihrer Form auf. Diese Anpassungen oder Veränderungen dienen dazu, Unregelmäßigkeiten in der Spiralstruktur des Wickelverbundkörpers auszugleichen.

Mit dem Ausdruck "in mindestens einem Bereich der Außenumfangsfläche" ist gemeint, dass durchaus auch mehrere Bereiche vorgesehen sein können, die eine lokale Abweichung von der zylindrischen oder hohlzylindrischen Form aufweisen. Es muss sich hierbei nicht zwangsläufig um die gleiche Abweichung in verschiedenen Bereichen handeln. Vielmehr können zwei oder mehr Bereiche vorgesehen sein, in denen unterschiedliche Abweichungen von der zylindrischen oder hohlzylindrischen Form des Wickelkerns vorgesehen sind. Wenn im Folgenden von einer lokalen Abweichung in einem Bereich der Außenumfangsfläche die Rede ist, ist damit eine Abweichung gemäß dem vorgenannten Merkmal h. gemeint.

Durch das vorgenannte Merkmal h. wird erreicht, dass die insbesondere bei einem Laden oder Entladen des Wickelverbundkörpers in Bereichen von Unregelmäßigkeiten der Spiralstruktur des Wickelverbundkörpers lokal auftretende Druckspitzen kompensiert werden können. Insbesondere ein lokal verstärkt wirkender Druck im Zentralbereich des Wickelverbundkörpers, der insbesondere während des Ladeprozesses auftreten kann, kann durch die erfindungsgemäß vorgesehene lokale Abweichung in einem Bereich der Außenumfangsfläche des Wickelverbundkörpers ausgeglichen werden. Die oben beschriebene Gefahr einer Behinderung des Ionenaustauschs sowie - im Fall einer Lithium-Ionen-Zelle - die Gefahr einer Lithium-Plattierung, sind insbesondere in diesen Bereichen deutlich verringert. Insgesamt kann damit die Zuverlässigkeit und Lebensdauer der Energiespeicherzelle verbessert bzw. verlängert werden.

Der axial ausgerichtete Hohlraum, der durch die innere Verbundkörpermantelfläche definiert wird und der sich im Zentrum des Wickelverbundkörpers befindet, weist bevorzugt Öffnungen an den beiden Stirnseiten auf. Der Hohlraum ist somit in bevorzugten Ausführungsformen teilweise durch den Wickelkern ausgefüllt. Sofern es sich bei dem Wickelkern nicht um einen hohlzylinderförmigen Wickelkern, sondern um einen massiven Wickelkern handelt, ist der Hohlraum vollständig ausgefüllt.

Bei den endständigen Stirnseiten des hohlzylindrisch geformten Wickelverbundkörpers handelt es sich insbesondere um im Wesentlichen kreisrunde Stirnseiten, wobei sich in diesem Zusammenhang der Ausdruck "im Wesentlichen" darauf bezieht, dass es durch die erwähnten Unregelmäßigkeiten, die in der Spiralstruktur des Wickelverbundkörpers auftreten können, bereichsweise zu einer Abweichung von einer idealen kreisrunden Form kommen kann.

Die im Wesentlichen zylindrische oder hohlzylindrische Form der Wickelkerns gemäß dem vorgenannten Merkmal g. bezieht sich darauf, dass der Wickelkern eine zylindrische oder hohlzylindrische Grundform aufweist, dass aber gemäß dem vorgenannten Merkmal h. eine oder gegebenenfalls mehrere Abweichungen von der zylindrischen oder hohlzylindrischen Form vorgesehen sein können.

Die erfindungsgemäße elektrochemische Energiespeicherzelle weist erfindungsgemäß die beiden unmittelbar folgenden zusätzlichen Merkmale i. und j. auf:
i. Die spiralförmige Struktur des Wickelverbundkörpers umfasst mindestens eine lokale Unregelmäßigkeit in mindestens einem Bereich, in dem eines der gewickelten Elektrodenbänder endet und/oder eine plötzliche Dickenänderung eines der Elektrodenbänder auftritt.
j. Der mindestens eine Bereich der Außenumfangsfläche des Wickelkerns, in dem die lokale Abweichung von der zylindrischen oder hohlzylindrischen Form auftritt, ist einer lokalen Unregelmäßigkeit des Wickelverbundkörpers räumlich zugeordnet.

Die lokalen Unregelmäßigkeiten, die an verschiedenen Stellen in der Spiralstruktur auftreten können, sind mit den eingangs erläuterten Unregelmäßigkeiten in der Spiralstruktur gleichzusetzen. Bereiche, in denen eines der gewickelten Elektrodenbänder endet und/oder eine plötzliche Dickenänderung eines der Elektrodenbänder auftritt, treten vor allem im zentralen und im äußeren Bereich des Wickelverbundkörpers auf. Die Unregelmäßigkeiten in der Spiralform des Wickelverbundkörpers äußern sich dabei insbesondere in lokal auftretenden Diskontinuitäten bezüglich der Änderung des Abstands von Elektrodenbändern zur Wickelachse. So kann beispielsweise im Bereich des Endes eines Elektrodenbandes bei einem benachbarten, das Ende überlappenden Elektrodenband eine plötzliche Richtungsänderung auftreten.

Es ist allgemein bevorzugt, dass die äußeren Windungen des Wickelverbundkörpers von den Separatorbändern allein gebildet werden und so die Elektrodenbänder nach außen hin isolieren können. Auch finden sich die äußeren und inneren Enden von Anode und Kathode in der Regel nicht an der gleichen Position im Elektrodenverbund. Jedes Ende von Anode und Kathode stellt dabei eine Störstelle in der Wickelstruktur dar und resultiert in einer Unregelmäßigkeit der Wickelstruktur.

Weiterhin ist allgemein bevorzugt, dass die Stromkollektoren der Elektroden endständig nicht mit Elektrodenmaterial beschichtet sind. So können beispielsweise die inneren Windungen des Wickelverbundkörpers allein vom Anodenstromkollektor gebildet sein. An der Position, an der die Beschichtung mit Aktivmaterial einsetzt, treten eine stufenweise oder sprungartige Veränderung der Dicke des Elektrodenbands und damit eine weitere Störstelle auf. Bedingt durch den Herstellungsprozess kommt es oftmals am Beginn und am Ende einer Beschichtung mit einem Elektrodenmaterial zu einem Maximum der Dicke der Beschichtung, so dass die Unregelmäßigkeiten in diesen Bereichen gegebenenfalls noch verstärkt werden.

Weiterhin kann es zu Störstellen kommen, wenn die beidseitigen Beschichtungen der Kathode und/oder der Anode sich nicht in ihren Startpunkten genau gegenüberliegend befinden, sondern versetzt sind. Von besonderer Bedeutung sind allem die Beschichtungen der Anode, da häufig das Aktivmaterial der Anode besonders starken Volumenschwankungen bei dem Laden und Entladen der Energiespeicherzelle unterliegt.

Durch die räumliche Zuordnung der lokalen Abweichung in dem Bereich der Außenumfangsfläche des Wickelkerns zu der lokalen Unregelmäßigkeit des Wickelverbundkörpers sollen die durch die Störstellen verursachten Folgen kompensiert werden. Kommt es beispielsweise in Folge einer Störstelle zu einem lokalen Druck auf den Wickelkern, wird dieser kompensiert, indem der Wickelkern eine Vertiefung aufweist, in die der Wickelverbundkörpers entspannen kann.

Die räumliche Zuordnung kann insbesondere durch eine direkte räumliche Angrenzung der lokalen Abweichung an die Störstelle bzw. die lokale Unregelmäßigkeit erreicht werden.

Die räumliche Zuordnung weiterhin darin bestehen, dass die lokale Abweichung in dem Bereich der Außenumfangsfläche von einer durch die Wickelachse und die lokale Unregelmäßigkeit in der Spiralstruktur geführte Gerade geschnitten wird.

Besonders bevorzugt ist die lokale Abweichung einer lokalen Störstelle räumlich zugeordnet, die durch einen Übergangsbereich bei der Aktivmaterialbeschichtung der Anode bewirkt wird.

In einer weiteren besonders bevorzugten Ausgestaltung der erfindungsgemäßen elektrochemischen Energiespeicherzelle zeichnet sich die Energiespeicherzelle durch mindestens eines der unmittelbar folgenden zusätzlichen Merkmale a. und b. aus:
a. Die lokale Abweichung von der zylindrischen oder hohlzylindrischen Form besteht in einer stufenförmigen oder kontinuierlichen Verringerung und/oder Erweiterung des Außendurchmessers des Wickelkerns.
b. Die lokale Abweichung besteht in mindestens einer stufenförmigen oder kontinuierlichen Verringerung und/oder Erweiterung des Außendurchmessers des Wickelkerns, wobei die mindestens eine stufenförmige oder kontinuierliche Verringerung und/oder Erweiterung des Außendurchmessers sich axial über die vorzugsweise gesamte Höhe des Wickelkerns erstreckt. Besonders bevorzugt sind die unmittelbar vorstehenden Merkmale a. und b. in Kombination realisiert.

Bei der stufenförmigen oder kontinuierlichen Verringerung und/oder Erweiterung des Außendurchmessers des Wickelkerns kann es sich, je nach Blickrichtung des Betrachters, um einen lokalen Abfall oder um eine lokale Zunahme des Außendurchmessers handeln. In besonders bevorzugter Weise erstreckt sich diese Verringerung und/oder Erweiterung des Außendurchmessers, und damit die die lokale Abweichung, axial über die vorzugsweise gesamte Höhe des Wickelkerns. Dem liegt zugrunde, dass sich auch lokale Störstellen, also die beschriebenen Unregelmäßigkeiten in Wickelverbundkörpern, in der Regel über die gesamte Höhe der Wickelverbundkörper erstrecken, so dass durch diese Ausgestaltung die Abweichung in besonders geeigneter Weise die sich axial erstreckende Störstelle kompensieren kann.

Insbesondere mit einer stufenförmigen Verringerung und/oder Erweiterung des Außendurchmessers des Wickelkerns lassen sich abrupte Störstellen oder andere extreme Störstellen in der Spiralstruktur des Wickelverbundkörpers kompensieren. Gleichfalls ist es auch möglich, kontinuierliche Verringerungen und/oder Erweiterungen in der Außenumfangsfläche vorzusehen. Es können auch Kombinationen von stufenförmigen und kontinuierlichen Verringerungen/Erweiterungen vorgesehen sein, wobei beispielsweise in die eine Richtung eine kontinuierliche Verringerung des Außendurchmessers und dann eine stufenförmige Erweiterung des Außendurchmessers vorgesehen sein kann. Dies bildet gewissermaßen eine axial ausgerichtete Kerbe in Außenumfangsfläche des Wickelkerns, wobei auf einer Seite eine sanfte Steigung und auf der anderen Seite eine abrupte Steigung vorgesehen ist.

In Bezug auf die Gestaltung der lokalen Abweichung in der Außenumfangsfläche des Wickelkerns kann sich die erfindungsgemäße elektrochemische Energiespeicherzelle weiterhin durch mindestens eines der folgenden zusätzlichen Merkmale a. und b. auszeichnen:
a. Die lokale Abweichung in dem mindestens einen Bereich der Außenumfangsfläche des Wickelkerns besteht in einer Vertiefung in der Außenumfangsfläche des Wickelkerns und/oder einer Wölbung der Außenumfangsfläche des Wickelkerns.
b. Die lokale Abweichung in mindestens einem Bereich der Außenumfangsfläche des Wickelkerns besteht in einer Vertiefung in der Außenumfangsfläche des Wickelkerns und/oder einer Wölbung der Außenumfangsfläche des Wickelkerns, wobei die Vertiefung und/oder die Wölbung sich axial über die vorzugsweise gesamte Höhe des Wickelkerns erstreckt/erstrecken.

Besonders bevorzugt sind die unmittelbar vorstehenden Merkmale a. und b. in Kombination realisiert.

Unter der Vertiefung in der Außenumfangsfläche des Wickelkerns ist insbesondere eine konkave Einbuchtung in der Außenumfangsfläche zu verstehen. Unter der Wölbung ist insbesondere eine konvexe Ausbuchtung der Außenumfangsfläche zu verstehen.

In bevorzugten Ausführungsformen erstreckt sich die Vertiefung über die gesamte Höhe des Wickelkerns, beispielsweise in Form einer Nut. Die Wölbung kann beispielsweise als Steg ausgebildet sein, der sich in bevorzugten Ausführungsformen über die gesamte Höhe des Wickelkerns erstreckt. Es kann auch vorgesehen sein, dass eine Vertiefung und eine Wölbung miteinander kombiniert werden, um für eine Störstelle einen Gegenpart in der Außenumfangsfläche des Wickelkerns zu bilden, um zum einen eine Aufnahme für sich übermäßig ausdehnende Bereiche und zugleich einen Halt zur Vermeidung einer Verschiebung der Spiralstruktur zu bieten.

Unter Anwendung der verschiedenen Möglichkeiten zur Ausgestaltung der lokalen Abweichung kann ein Wickelkern bereitgestellt werden, der in optimaler Weise eine oder mehrere lokale Störstellen in dem Wickelverbundkörper zu kompensieren vermag. Je nach Grad der Ausprägung der Störstelle kann eine entsprechende Abweichung in einem Bereich der Außenumfangsfläche realisiert werden, die die mit der Störstelle einhergehenden ungleichmäßigen Druckverteilungen ausgleichen kann. Beispielsweise kann mittels einer Vertiefung eine lokal verstärkte Ausdehnung des Wickelverbundkörpers kompensiert werden. Mit einer Wölbung in der Außenumfangsfläche des Wickelkerns kann beispielsweise lokal eine Verschiebung der Spiralstruktur vermieden werden, wenn sich benachbarte Bereiche in der Spiralstruktur übermäßig ausdehnen. Demgemäß können besonders bevorzugt Kombinationen von Vertiefungen und Wölbungen eingesetzt werden.

In besonders bevorzugten weist der Wickelkern in zwei oder mehr Bereichen der Außenumfangsfläche eine lokale Abweichung von der zylindrischen oder hohlzylindrischen Form auf, die jeweils einer lokalen Störstelle räumlich zugeordnet sind. Die Anzahl der lokalen Abweichungen hängt dabei insbesondere von der Anzahl und der Position der lokalen Störstellen in dem jeweiligen Wickelverbundkörper ab, die sich bei der Herstellung des Wickelverbundkörpers ergeben.

In einer besonders bevorzugten Ausgestaltung der erfindungsgemäßen elektrochemischen Energiespeicherzelle ist die Energiespeicherzelle durch mindestens eines der unmittelbar folgenden Merkmale a. bis c. gekennzeichnet:
a. Der Wickelkern ist als Hohlzylinder ausgebildet und verfügt über eine innere Kernmantelfläche, die einen axial ausgerichteten Hohlraum im Inneren des Wickelkerns begrenzt.
b. Der Wickelkern weist als lokale Abweichung eine Vertiefung in der Außenumfangsfläche sowie eine dazu korrespondierende, in den axial ausgerichteten Hohlraum ragende Wölbung auf.
c. Der Wickelkern weist als lokale Abweichung eine Wölbung der Außenumfangsfläche sowie eine dazu korrespondierende Vertiefung in der inneren Kernmantelfläche auf.

Besonders bevorzugt sind die unmittelbar vorstehenden Merkmale a. und b. oder a. und c. oder a. bis c. in Kombination realisiert.

Wenn die lokale Abweichung eines hohlzylinderförmigen Wickelkerns eine Entsprechung im Inneren des Wickelkerns hat, hat dies den Vorteil, dass mittels geeigneter Werkzeuge, beispielsweise mittels eines entsprechend gegengleich gestalteten Wickeldorns, der in das Innere des Wickelkerns eingeführt wird, die lokale Abweichung für den Wickelprozess genau positioniert werden kann. Insbesondere kann so in besonders genauer und präziser Weise die oben beschriebene räumliche Zuordnung der Abweichung zu den lokalen Störstellen in dem Wickelverbundkörper realisiert werden.

Es ist dabei nicht zwingend erforderlich, dass die innere Kernmantelfläche des Wickelkerns die Außenumfangsfläche mit der Abweichung oder den Abweichungen exakt nachbildet. Eine stufenweise Änderung im Außenumfang kann beispielsweise auch durch eine kontinuierliche Änderung im Innenumfang nachgebildet werden.

Wickelkerne gemäß den unmittelbar vorstehenden Merkmalen a. bis c. weisen besonders bevorzugt eine im Wesentlichen gleichmäßige Wandstärke auf.

In einer besonders bevorzugten Ausführungsform der Energiespeicherzelle ist es vorgesehen, dass der Wickelkern als lokale Abweichung die erwähnte axial ausgerichtete Kerbe oder eine sonstige axiale Vertiefung in der Außenumfangsfläche des Wickelkerns oder aufweist und dass in dieser Vertiefung ein Ende eines der Elektrodenbänder oder ein Ende eines der Separatorbänder angeordnet ist.

Dem liegt zugrunde, dass das innere Ende eines Elektrodenbandes in Wickelrichtung eine Kante bildet, über die beim Wickeln eine Folgewindung gelegt wird, was nahezu zwingend zu einer Störstelle in der Wickelstruktur führt. Dieses Problem lässt sich umgehen oder zumindest verringern, wenn man das Ende in der Kerbe oder in der Vertiefung platziert. Im Idealfall kann das Auftreten einer Kante, über die gewickelt werden muss, vollständig vermieden werden.

In einigen Ausführungsformen ist es üblich, bei der Herstellung eines Wickelverbundkörpers am Startpunkt der Wicklung den Elektrodenverbund an dem Wickelkern anzuschweißen. Die Verschweißung führt im Allgemeinen zu einer lokalen Verdickung, die die unmittelbar nachfolgende und gegebenenfalls weitere sich anschließende Windungen, die über der Verdickung liegen, in ihrer Struktur stört. Beispielsweise kann auch durch die Verschweißung eine störende Kante gebildet werden.

Bei einer Befestigung des oder der Separatorbänder in der Kerbe oder der Vertiefung in der Außenumfangsfläche des Wickelkerns hat das Auftreten von Verdickungen keine Auswirkungen, solange eine entstehende Kante nicht aus der Kerbe oder Vertiefung herausragt.

In einer weiteren bevorzugten Ausgestaltung zeichnet sich die erfindungsgemäße elektrochemische Energiespeicherzelle durch das unmittelbar folgende zusätzliche Merkmal a. aus:
a. Die lokale Abweichung in dem mindestens einen Bereich der Außenumfangsfläche des als Hohlzylinder ausgebildeten Wickelkerns umfasst eine Durchbrechung der Wandung des Wickelkerns, insbesondere einen Schlitz in der Wandung.

Die Durchbrechung der Wandung kann sich insbesondere über die gesamte Höhe des Wickelkerns erstrecken. Durch einen derart ausgebildeten Schlitz oder eine derartige Spalte kann die lokale Abweichung als Klemmelement wirken. Zu Beginn eines Wickelprozesses kann beispielsweise ein Separatorband in den Schlitz geklemmt werden, so dass kein Anschweißen des Elektrodenverbundes am Wickelkern erforderlich ist.

Es kann in diesem Zusammenhang mit besonderem Vorteil vorgesehen sein, dass die Enden der durch den Schlitz unterbrochenen Wandung des Wickelkerns sich überlappen, so dass in besonders vorteilhafter Weise eine Klemmung erreicht wird. Alternativ kann es auch vorgesehen sein, dass die Stirnflächen der Wandung des Hohlzylinders, die den Schlitz umgrenzen, im zusammengepressten Zustand direkt aufeinandertreffen.

Weiterhin kann es vorgesehen sein, dass die erfindungsgemäße elektrochemische Energiespeicherzelle durch eines der folgenden Merkmale gekennzeichnet ist:
a. Die Außenumfangsfläche des Wickelkerns weist eine oder mehrere Vertiefungen zur Aufnahme von mindestens einem Sensor auf.
b. Die Außenumfangsfläche des Wickelkerns weist eine oder mehrere Vertiefungen zur Aufnahme von mindestens einem Sensor auf, wobei die Vertiefung oder die Vertiefungen sich axial über die vorzugsweise gesamte Höhe des Wickelkerns erstreckt/erstrecken.

Dieser Ausführungsform liegt zugrunde, dass bei vielen Verwendungen von Energiespeicherzellen eine Überwachung ihres Betriebs sinnvoll und/oder erforderlich ist. Es ist daher bekannt, eine Sensorik in elektrochemische Energiespeicherzellen zu integrieren, um beispielsweise Daten zur Temperatur und/oder zum Druck innerhalb der Zelle erfassen zu können. Weiterhin sind beispielsweise chemische Sensoren oder Spannungssensoren im Zusammenhang mit Energiespeicherzellen bekannt. Mithilfe der Sensorik in einer Energiespeicherzelle kann eine Zustandsüberwachung und/oder eine Diagnose der Energiespeicherzelle durchgeführt werden.

Die erfindungsgemäße Energiespeicherzelle sieht in bevorzugter Weise daher vor, in der Außenumfangsfläche des Wickelkerns als lokale Abweichungen eine oder mehrere Vertiefungen vorzusehen, die zur Aufnahme von einem oder mehreren Sensoren dienen. Je nach vorgesehener Position des Sensors in der Energiespeicherzelle kann sich die Vertiefung mehr oder weniger weit axial über die Höhe des Wickelkerns erstrecken. Es können auch mehrere Vertiefungen an unterschiedlichen Positionen in der Außenumfangsfläche des Wickelkerns zur Aufnahme von mehreren Sensoren vorgesehen sein. Mit dieser so möglichen Position eines oder mehrerer Sensoren in der Energiespeicherzelle können insbesondere die Bedingungen im Zentrum des Wickelverbundkörpers und damit im Inneren der Energiespeicherzelle erfasst werden.

Geeignete Sensoren für diese Ausgestaltung der erfindungsgemäßen Energiespeicherzelle sind beispielsweise eine Referenzelektrode zur Messung des Elektrodenpotentials der Zelle und/oder ein Temperatursensor zur Temperaturüberwachung, insbesondere zur Feststellung einer übermäßigen Erwärmung, und/oder ein Drucksensor, mit dem beispielsweise eine übermäßige Druckentwicklung, insbesondere ein Ansteigen des Zelleninnendruck, festgestellt werden kann.

Bei der Gestaltung der Außenumfangsfläche des Wickelkerns kann beispielsweise auch ein im Zentrum des Wickelverbundkörpers vorgesehener elektrischer Leiter und ähnliche Strukturelemente berücksichtigt werden. So können in der Außenumfangsfläche des Wickelkerns als lokale Abweichungen eine oder mehrere Vertiefungen vorgesehen sein, die Raum für diese zusätzlichen Strukturelemente und/oder diesen elektrischen Leiter bieten.

In besonders bevorzugter Weise ist die erfindungsgemäße elektrochemische Energiespeicherzelle durch das folgende zusätzliche Merkmal a. gekennzeichnet:
a. der Wickelkern ist aus Kunststoff oder aus einem Kunststoffverbundmaterial gebildet.

Kunststoff ist ein weit verbreiteter Werkstoff für die Herstellung von Wickelkernen und kann in einfacher Weise für die Zwecke der Erfindung bearbeitet werden. Beispielsweise können Wickelkerne mit den erfindungsgemäßen lokalen Abweichungen von der zylindrischen oder hohlzylindrischen Form als Spritzgussteil gefertigt werden. Eine andere Möglichkeit ist ein Strangpressverfahren für die Herstellung der Wickelkerne. In entsprechender Weise können Kunststoffverbundmaterialien für die Herstellung der Wickelkerne verwendet werden. Kunststoff und Kunststoffverbundmaterialien haben zudem den Vorteil, dass sie leicht sind und nicht wesentlich zum Gewicht der resultierenden Energiespeicherzelle beitragen. Zudem sind sie elektrisch isolierend und eignen sich daher auch aus diesem Grund in besonderer Weise für die erfindungsgemäßen Energiespeicherzellen als Material für den Wickelkern.

Die erfindungsgemäße Energiespeicherzelle weist ein bevorzugt zylindrisches Gehäuse auf. Zylindrisch ist hierbei nicht im streng geometrischen Sinn zu verstehen. Das Gehäuse kann durchaus Abweichungen von einem perfekten Zylinder aufweisen, beispielsweise im Bereich eines endständigen Gehäuseverschlusses oder auf der Ober- oder der Unterseite, die nicht zwingend vollständig eben ausgebildet sein müssen. Bevorzugt weisen der Gehäusemantel oder zumindest ein Segment des Gehäusemantels einen weitestgehend oder vollständig konstanten Außenradius auf und kommen in einigen Ausführungsformen in ihrer Form einem perfekten Kreiszylinder sehr nahe.

Bei dem Gehäuse handelt es sich insbesondere um ein metallisches Gehäuse, das bevorzugt aus einem positiv gepolten und einem negativ gepolten metallischen Gehäuseteile gebildet ist. Die Gehäuseteile können z.B. aus einem vernickelten Stahlblech, aus Edelstahl (beispielsweise vom Typ 1.4303 oder 1.4304), aus Kupfer, aus vernickeltem Kupfer oder aus legiertem oder unlegiertem Aluminium bestehen. Es kann auch bevorzugt sein, dass mit der Kathode elektrisch verbundene Gehäuseteile aus Aluminium oder aus einer Aluminiumlegierung und mit der Anode elektrisch verbundene Gehäuseteile aus Kupfer oder einer Kupferlegierung oder aus vernickeltem Kupfer bestehen.

Das positiv gepolte und das negativ gepolte Gehäuseteil können beispielsweise becherförmig ausgebildet sein. Sie weisen dann jeweils einen kreisrunden Becherboden, eine umlaufende Becherwand, einen Becherrand mit einer endständigen Schnittkante und eine von dem Becherrand definierte Becheröffnung auf. Die Becherwände lassen sich bevorzugt als ringförmige Segmente eines Hohlzylinders mit kreisförmigem Querschnitt beschreiben. Ihre Durchmesser entsprechen bevorzugt entweder exakt denen des jeweils dazugehörigen kreisförmigen Bodens oder liegen darüber. In der Regel sind die Becherwände orthogonal zu den dazugehörigen Böden ausgerichtet. In zusammengesetztem Zustand entsprechen die Becherböden der Ober- und der Unterseite des Gehäuses, während die Becherwände den ringförmigen, umlaufenden Gehäusemantel bilden.

Es ist auch möglich, dass eines der Gehäuseteile (positiv oder negativ) becherförmig ausgebildet ist und eine kreisrunde Öffnung aufweist, während das umgekehrt gepolte Gehäuseteil als Scheibe ausgebildet ist oder eine Scheibe umfasst, welche die Öffnung verschließt.

Zwischen den Gehäuseteilen ist bevorzugt eine ringförmige elektrisch isolierende Dichtung angeordnet.

In Bezug auf die Ausgestaltung des Gehäusemantels und insbesondere der inneren Gehäusemantelfläche ist in einer besonders bevorzugten Ausführungsform der erfindungsgemäßen elektrochemischen Energiespeicherzelle mindestens eines der unmittelbar folgenden zusätzlichen Merkmale a. und b. vorgesehen:
a. Der Gehäusemantel weist in eine hohlzylindrische Form auf.
b. Der Gehäusemantel weist in mindestens einem Bereich seiner inneren Gehäusemantelfläche eine lokale Abweichung von der hohlzylindrischen Form auf.

Besonders bevorzugt sind die unmittelbar vorstehenden Merkmale a. und b. in Kombination realisiert.

Dieser Ausführungsform liegt zugrunde, dass auch im außen liegenden Bereich des Wickelverbundkörpers die oben beschriebenen Unregelmäßigkeiten in der Spiralstruktur des Wickelverbundkörpers auftreten können, die zu ungleichmäßigen Druckbelastungen im äußeren Bereich des Wickelverbundkörpers führen können. Da der Wickelverbundkörper mit seiner Außenumfangsfläche bevorzugt flächig an die innenseitige Gehäusemantelfläche angrenzt, können durch die Abweichungen von der hohlzylindrischen Form derartige Unregelmäßigkeiten in der Spiralstruktur und deren nachteilige Wirkung auf die Funktion der Energiespeicherzelle kompensiert werden. Die Unregelmäßigkeiten in äußeren Bereichen des Wickelverbundkörpers äußern sich insbesondere in einer Abweichung von einer idealen Zylinderform bzw. Hohlzylinderform im Außenumfang des Wickelverbundkörpers, die sich insbesondere bei einer Expansion und bei einem Schrumpfen des Wickelverbundkörpers im Zuge des Ladens und des Entladens der Energiespeicherzelle negativ auswirken. Zur Kompensation derartiger Unregelmäßigkeiten sind in bevorzugter Weise an der inneren Gehäusemantelfläche Abweichungen in mindestens einem Bereich in analoger Weise wie bei der oder den oben erläuterten lokalen Abweichungen in dem mindestens einen Bereich der Außenumfangsfläche des Wickelkerns vorgesehen.

Während die oben beschriebenen lokalen Abweichungen in Bereichen der Außenumfangsfläche des Wickelkerns zur Kompensation von Störstellen im Bereich der inneren Verbundkörpermantelfläche dienen, sind die Abweichungen in dem mindestens einen Bereich der inneren Gehäusemantelfläche in erster Linie zur Kompensation von Störstellen im Bereich der äußeren Verbundkörpermantelfläche des Wickelverbundkörpers geeignet. Die erfindungsgemäßen Maßnahmen folgen dem Grundsatz, dass die Form der innere Gehäusemanteloberfläche dem Verlauf der Unregelmäßigkeiten auf dem äußeren Umfang des Wickelverbundkörpers folgt, so dass sich die äußere Verbundkörpermantelfläche ohne Unstetigkeiten an die innere Gehäusemantelfläche anlegen kann.

In besonders vorteilhafter Weise können die lokalen Abweichungen in mindestens einem Bereich der Außenumfangsfläche mit den lokalen Abweichungen in dem mindestens einen Bereich der inneren Gehäusemantelfläche miteinander kombiniert werden, so dass alle Unregelmäßigkeiten, die im inneren Bereich und im äußeren Bereich des Wickelverbundkörpers gegebenenfalls auftreten, kompensiert werden können.

Es ist allerdings auch möglich, dass Abweichungen ausschließlich auf der Außenumfangsfläche des Wickelkerns oder ausschließlich auf der inneren Gehäusemantelfläche vorgesehen sind. Grundsätzlich sind die Ausführungsformen, bei denen der Gehäusemantel in mindestens einem Bereich seiner inneren Gehäusemantelfläche eine lokale Abweichung von der hohlzylindrischen Form aufweist, also auch unabhängig vom Merkmal h. des Anspruchs 1 verwirklicht werden.

Vorzugsweise zeichnet sich die erfindungsgemäße Energiespeicherzelle durch das unmittelbar folgende zusätzliche Merkmal a. aus:
a. Der mindestens eine Bereich der inneren Gehäusemantelfläche, der die Abweichung aufweist, ist einer lokalen Störstelle des Wickelverbundkörpers räumlich zugeordnet.

Durch diese lokale Zuordnung, die in analoger Weise wie die für den Wickelkern beschriebene ausgestaltet sein kann, erlaubt die erfindungsgemäße Energiespeicherzelle eine Kompensation von auch im äußeren Umfang des Wickelverbundkörpers lokal wirkendem Druck infolge von Ungleichmäßigkeiten bzw. von Störstellen im äußeren Bereich der Spiralstruktur des Wickelverbundkörpers. Im äußeren Bereich der Spiralstruktur des Wickelverbundkörpers tragen vor allem das Ende des kathodischen Elektrodenbandes und das Ende des anodischen Elektrodenbandes zu solchen Störstellen bei. Im Allgemeinen treten bei derartigen Wickelverbundkörper vor allem zwei Störstellen im äußeren Umfang auf, die durch das Ende der jeweiligen Elektrodenbänder im äußeren Umfang des Wickelverbundkörpers bedingt sind. Insbesondere diese beiden Störstellen können durch entsprechende lokale Abweichungen des Gehäusemantels von der hohlzylindrischen Form kompensiert werden.

In Bezug auf die Ausgestaltung dieser lokalen Abweichung der inneren Gehäusemantelfläche zeichnet sich die erfindungsgemäße Energiespeicherzelle insbesondere durch mindestens eines der unmittelbar folgenden zusätzlichen Merkmale a. bis d. aus:
a. Die lokale Abweichung besteht in einer stufenförmigen oder kontinuierlichen Verringerung und/oder Erweiterung des Innendurchmessers des Gehäusemantels.
b. Die lokale Abweichung besteht in einer stufenförmigen oder kontinuierlichen Verringerung und/oder Erweiterung des Innendurchmessers des Gehäusemantels, wobei die stufenförmige oder kontinuierliche Verringerung und/oder Erweiterung des Innendurchmessers sich axial über die vorzugsweise gesamte Höhe des Gehäuses erstreckt/erstrecken.
c. Die lokale Abweichung besteht in einer Vertiefung in der inneren Gehäusemantelfläche und/oder einer Wölbung der inneren Gehäusemantelfläche.
d. Die lokale Abweichung besteht in einer Vertiefung Wölbung in der inneren Gehäusemantelfläche und/oder einer Wölbung der inneren Gehäusemantelfläche, wobei die Vertiefung und/oder Wölbung sich axial über die vorzugsweise gesamte Höhe des Gehäuses erstreckt/erstrecken.

Besonders geeignet sind Kombinationen von Vertiefungen und Wölbungen, die gemeinsam vorgesehen sein können. So kann durch eine Vertiefung eine übermäßige lokale Ausdehnung bei Lade-/Entladeprozessen aufgefangen bzw. aufgenommen werden, wobei durch eine Wölbung die Spiralstruktur in ihrer Form gehalten und gestützt werden kann.

Zur Ausbildung der Vertiefungen und Wölbungen kann es vorgesehen sein, den Gehäusemantel gezielt zu verformen. Beispielsweise können auch Stege aus Kunststoff oder aus einem anderen Material an der inneren Gehäusemantelfläche fixiert werden.

Zur Realisierung der lokalen Abweichung von der hohlzylindrischen Form des Gehäusemantels kann der Gehäusemantel auch durch eine ringförmige Einlage verstärkt sein, die an der Innenseite des Gehäusemantels anliegt. Bevorzugt weist die Einlage eine Höhe im Bereich von 50 % bis 100 % der Höhe des Gehäusemantels auf. Die Einlage kann eine Dicke aufweisen, die sich in der Größenordnung der Dicke des Gehäusemantels bewegt. Eine lokale Verringerung des Innendurchmessers des Gehäusemantels lässt sich beispielsweise realisieren, indem eine ringförmige Einlage verwendet wird, die in mindestens einem Abschnitt eine erhöhte Dicke aufweist. Eine lokale Erweiterung des Innendurchmessers des Gehäusemantels lässt sich beispielsweise realisieren, indem eine ringförmige Einlage verwendet wird, die in mindestens einem Abschnitt eine verringerte Dicke aufweist.

Für eine lokale Erweiterung des Innendurchmessers des Gehäusemantels kann weiterhin auch eine bandförmige Einlage verwendet werden, die über ihre volle Länge an der Innenseite des Gehäusemantels anliegt, allerdings die Innenseite nicht vollständig bedecken kann, da sie kürzer ist als der innere Umfang des Gehäusemantels. Bevorzugt weist auch diese Einlage eine Höhe im Bereich von 50 % bis 100 % der Höhe des Gehäusemantels auf und kann eine Dicke aufweisen, die sich in der Größenordnung der Dicke des Gehäusemantels bewegt.

In besonders bevorzugter Weise handelt es sich bei der erfindungsgemäßen Energiespeicherzelle um eine sekundäre Lithium-Ionen-Zelle. Lithium-Ionen-Zellen zeichnen sich im Allgemeinen dadurch aus, dass sie Elektroden umfassen, die Lithium-Ionen reversibel aufnehmen und wieder abgeben können. Weiterhin enthalten sie einen Lithium-Ionen enthaltenden Elektrolyten. Als Aktivmaterialien kommen für die Elektroden von Lithium-Ionen-Zellen sämtliche Materialien in Frage, die Lithium-Ionen aufnehmen und wieder abgeben können.

Besonders geeignet für die negative Elektrode von sekundären Lithium-Ionen-Zellen sind Materialien auf Kohlenstoffbasis wie graphitischer Kohlenstoff oder zur Interkalation von Lithium befähigte nicht-graphitische Kohlenstoffmaterialien. Weiterhin können auch metallische und halbmetallische Materialien, die mit Lithium legierbar sind, zum Einsatz kommen. So sind beispielsweise die Elemente Zinn, Antimon und Silizium in der Lage, mit Lithium intermetallische Phasen zu bilden. Insbesondere können die kohlenstoffbasierten Aktivmaterialien mit den metallischen und/oder halbmetallischen Materialien auch kombiniert werden. Alternativ oder zusätzlich kann auch Lithiumtitanat (Li₄Ti₅O₁₂) oder ein Derivat desselben in der negativen Elektrode enthalten sein.

Für die positive Elektrode von Lithium-Ionen-Zellen und insbesondere von sekundären Lithium-Ionen-Zellen kommen beispielsweise Lithium-Metalloxid-Verbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Mischungen der genannten Materialien können eingesetzt werden.

Als elektrochemisch inaktive Komponenten für Lithium-Ionen-Zellen sind an erster Stelle Elektrodenbinder und Leitmittel zu nennen. Die Elektrodenbinder gewährleisten die mechanische Stabilität der Elektroden und sorgen für die Kontaktierung der Partikel aus elektrochemisch aktivem Material untereinander sowie zum Stromkollektor. Übliche Elektrodenbinder basieren beispielsweise auf Polyvinylidenfluorid, Polyacrylat oder Carboxymethylcellulose. Leitmittel wie Ruß dienen dazu, die elektrische Leitfähigkeit der Elektroden zu erhöhen.

Als Separatoren kommen für Lithium-Ionen-Zellen insbesondere poröse Kunststofffolien in Frage, beispielsweise aus einem Polyolefin oder aus einem Polyetherketon. Auch Vliese und Gewebe aus diesen Materialien können zum Einsatz kommen.

Als ionenleitenden Elektrolyten können Lithium-Ionen-Zellen beispielsweise eine Mischung organischer Carbonate, in der ein Lithiumsalz gelöst ist, enthalten. Hierfür kommt im Grunde jedes Lithiumsalz in Frage, das aus dem Stand der Technik für Lithium-Ionen-Zellen bekannt ist. Ein prominentes Beispiel hierfür ist Lithiumhexafluorophosphat (LiPF₆). Bevorzugt sind die Elektroden und Separatoren von Lithium-Ionen-Zellen mit dem Elektrolyten getränkt.

In besonders bevorzugter Weise zeichnet sich die erfindungsgemäße Energiespeicherzelle durch eines der folgenden zusätzlichen Merkmale aus:
a. die elektrochemische Energiespeicherzelle ist eine zylindrische Rundzelle, insbesondere eine sekundäre Lithium-Ionen-Zelle in Form einer zylindrischen Rundzelle, oder
b. die elektrochemische Energiespeicherzelle ist eine Knopfzelle, insbesondere eine sekundäre Lithium-Ionen-Zelle in Form einer Knopfzelle.

Zylindrische Rundzellen weisen eine Höhe auf, die größer als ihr Durchmesser ist. Sie eignen sich insbesondere für Anwendungen im Automobilbereich, für E-Bikes oder auch für andere Anwendungen mit hohem Energiebedarf.

Bevorzugt liegt die Höhe als Rundzelle ausgebildeter Lithium-Ionen-Zellen im Bereich von 15 mm bis 150 mm. Der Durchmesser der zylindrischen Rundzellen liegt bevorzugt im Bereich von 10 mm bis 60 mm. Innerhalb dieser Bereiche sind Formfaktoren von beispielsweise 18 x 65 (Durchmesser mal Höhe in mm) oder 21 x 70 (Durchmesser mal Höhe in mm) besonders bevorzugt. Zylindrische Rundzellen mit diesen Formfaktoren eignen sich insbesondere zur Stromversorgung elektrischer Antriebe von Kraftfahrzeugen.

Die Nennkapazität einer als zylindrische Rundzelle ausgebildeten erfindungsgemäßen Lithium-Ionen-Zelle beträgt bevorzugt bis zu 90000 mAh. Mit dem Formfaktor von 21 x 70 hat die Zelle in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Zelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Energiespeicherzellen streng reglementiert. So haben etwa Angaben zur Nennkapazität von sekundären Nickel-Cadmium-Energiespeicherzellen auf Messungen gemäß den Normen IEC/EN 61951-1 und IEC/EN 60622, Angaben zur Nennkapazität von sekundären Nickel-Metallhydrid-Energiespeicherzellen auf Messungen gemäß der Norm IEC/EN 61951-2, Angaben zur Nennkapazität von sekundären Lithium-Ionen-Zellen auf Messungen gemäß der Norm IEC/EN 61960 und Angaben zur Nennkapazität von sekundären Blei-Säure-Zellen auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

Ebenso wie zylindrische Rundzellen sind auch Knopfzellen zylindrisch ausgebildet. Sie weisen jedoch eine Höhe (bevorzugt im Bereich von 4 mm bis 15 mm) auf, die gleich oder vorzugsweise geringer als ihr Durchmesser (bevorzugt im Bereich von 5 mm bis 25 mm) ist. Sie eignen sich vor allem zur Versorgung von kleinen elektronischen Geräten wie Uhren, Hörgeräten und kabellosen Kopfhörern mit elektrischer Energie.

Die Nennkapazität der als Knopfzelle ausgebildeten erfindungsgemäßen Energiespeicherzelle beträgt in einer Ausführungsform als Lithium-Ionen-Zelle bevorzugt bis zu 1500 mAh. Weiter bevorzugt liegt die Nennkapazität im Bereich von 100 mAh bis 1000 mAh, besonders bevorzugt im Bereich von 100 bis 800 mAh.

Die Erfindung umfasst darüber hinaus auch ein Verfahren zur Herstellung einer elektrochemischen Energiespeicherzelle, das durch die folgenden Verfahrensschritte gekennzeichnet ist:
a. Es werden mindestens zwei Elektrodenbänder mit jeweils einem bandförmigen Stromkollektor mit einer beidseitigen Aktivmaterialbeschichtung und mindestens einem zwischen den Elektrodenbändern angeordneten Separatorband bereitgestellt.
b. Es wird ein Wickelkern mit einer im Wesentlichen zylindrischen oder hohlzylindrischen Form bereitgestellt, der über eine Außenumfangsfläche verfügt, wobei die Außenumfangsfläche des Wickelkerns in mindestens einem Bereich eine Abweichung von einer zylindrischen oder hohlzylindrischen Form aufweist.
c. Zur Herstellung eines Wickelverbundkörpers werden die Elektrodenbänder und das mindestens eine Separatorband unter Ausbildung einer Spiralstruktur spiralförmig um den Wickelkern gewickelt, wobei das Wickeln derart vorgenommen wird, dass die Abweichung einer lokalen Störstelle in der Spiralstruktur räumlich zugeordnet ist.
d. Ein zylindrisches Gehäuse für die Energiespeicherzelle wird bereitgestellt.
e. Der Wickelverbundkörper wird in das Gehäuse eingebracht,
f. Der Wickelverbundkörper wird elektrisch kontaktiert und das Gehäuse geschlossen.

Kern dieses Verfahrens ist, dass ein im Wesentlichen zylindrischer oder hohlzylindrischer Wickelkern für die Herstellung des Wickelverbundkörpers verwendet wird, wobei die Außenumfangsfläche des Wickelkerns in mindestens einem Bereich eine Abweichung von einer zylindrischen oder hohlzylindrischen Form aufweist. Mit dieser Abweichung oder gegebenenfalls mehreren Abweichungen können Unregelmäßigkeiten in der Spiralstruktur des Wickelverbundkörpers kompensiert werden.

Bei dem Verfahren ist es weiterhin vorgesehen, dass die Abweichung einer lokalen Störstelle in der Spiralstruktur des Wickelverbundkörpers räumlich zugeordnet wird, so dass die Kompensation von negativen Auswirkungen einer durch die strukturellen Ungleichmäßigkeiten bewirkten ungleichen Druckverteilung in besonders wirksamer Weise erfolgen kann.

In besonders bevorzugter Weise wird die räumliche Zuordnung dadurch realisiert, dass ein entsprechend geformter Wickeldorn, auf den der hohlzylindrisch geformte Wickelkern aufschiebbar ist, verwendet wird, um eine entsprechende Positionierung des auf den Wickelkern zu wickelnden Elektrodenverbundes zu realisieren. Hierbei ist es besonders vorteilhaft, wenn die Innenwandung des hohlzylindrisch geformten Wickelkerns die Abweichung im Außenumfang des Wickelkerns direkt oder indirekt abbildet, so dass beispielsweise nur eine Position des entsprechend gegengleich geformten Wickeldorns innerhalb des Wickelkerns möglich ist. Auf diese Weise kann die korrekte Lokalisation des Wickelkerns auf dem Wickeldorn in Relation zu dem zu wickelnden Wickelverbundkörper gewährleistet werden.

Bei der mit diesem Verfahren herstellbaren Energiespeicherzelle handelt es sich insbesondere um eine Energiespeicherzelle mit den oben bereits erläuterten Merkmalen. Bezüglich weiterer Merkmale der Energiespeicherzelle und insbesondere des Wickelkerns und damit auch bezüglich weiterer Merkmale des Herstellungsverfahrens wird daher auch auf die obige Beschreibung verwiesen.

Schließlich umfasst die Erfindung ein Wickelwerkzeug, mit dem dieses Herstellungsverfahren durchgeführt werden kann. Insbesondere umfasst das Wickelwerkzeug einen Wickeldorn oder das Wickelwerkzeug ist ein Wickeldorn, wobei der Wickeldorn in Entsprechung zu dem erfindungsgemäß ausgebildeten Wickelkern ausgeformt ist. Insbesondere wenn der Wickelkern hohlzylindrisch ist und die innere Kernmantelfläche des Wickelkerns die Abweichung oder die Abweichungen auf der Außenumfangsfläche des Wickelkerns nachbildet, weist ein solcher Wickeldorn vorzugsweise eine gegengleiche Ausformung in seiner Außenumfangsfläche auf, die mit der innere Kernmantelfläche des Wickelkerns korrespondiert. Das Wickelwerkzeug und insbesondere der Wickeldorn kann dabei gewissermaßen das Innere des Wickelkerns als Negativ abbilden. In Korrespondenz zu dem Innenumfang bzw. der innere Kernmantelfläche des Wickelkerns kann der Wickeldorn zum Beispiel einen Nocken aufweisen, wenn der Wickelkern an dieser Position eine Vertiefung zeigt.

Mit einem solchen Wickelwerkzeug kann in besonders praktikabler Weise ein Wickelverbundkörper hergestellt werden, bei dem sich der Beginn der Wicklung auf dem Wickelkern ganz präzise lokalisieren lässt und die räumliche Zuordnung einer oder mehrerer Abweichungen auf der Außenumfangsfläche des Wickelkerns zu lokalen Störstellen in dem Wickelverbundkörper besonders präzise realisieren lässt.

Weitere Merkmale und Vorteile der Erfindung ergeben sich aus den Ansprüchen und aus der nachfolgenden Beschreibung von bevorzugten Ausführungsbeispielen der Erfindung in Verbindung mit den Zeichnungen. Die einzelnen Merkmale können dabei jeweils für sich oder in Kombination miteinander verwirklicht sein.

### KURZBESCHREIBUNG DER ZEICHNUNGEN

In den Zeichnungen zeigt:
- Fig. 1: einen Querschnitt durch einen Wickelverbundkörper mit Gehäuse einer Energiespeicherzelle zur Illustrierung der der Erfindung zugrunde liegenden Problematik (Stand der Technik);
- Fig. 2 A, B: mögliche Ausgestaltungen eines hohlzylindrischen Wickelkerns des Wickelverbundkörpers einer Energiespeicherzelle gemäß der Erfindung;
- Fig. 3 A, B: weitere mögliche Ausgestaltungen eines hohlzylindrischen Wickelkerns des Wickelverbundkörpers einer Energiespeicherzelle gemäß der Erfindung;
- Fig. 4: eine weitere mögliche Ausgestaltung eines hohlzylindrischen Wickelkerns des Wickelverbundkörpers einer Energiespeicherzelle gemäß der Erfindung;
- Fig. 5: eine mögliche Ausgestaltung des Gehäuses einer Energiespeicherzelle gemäß der Erfindung;
- Fig. 6: eine mögliche Ausführungsform einer erfindungsgemäßen Energiespeicherzelle; und
- Fig. 7: eine weitere mögliche Ausgestaltung des Gehäuses einer Energiespeicherzelle gemäß der Erfindung.

### DETAILLIERTE BESCHREIBUNG DER AUSFÜHRUNGSBEISPIELE

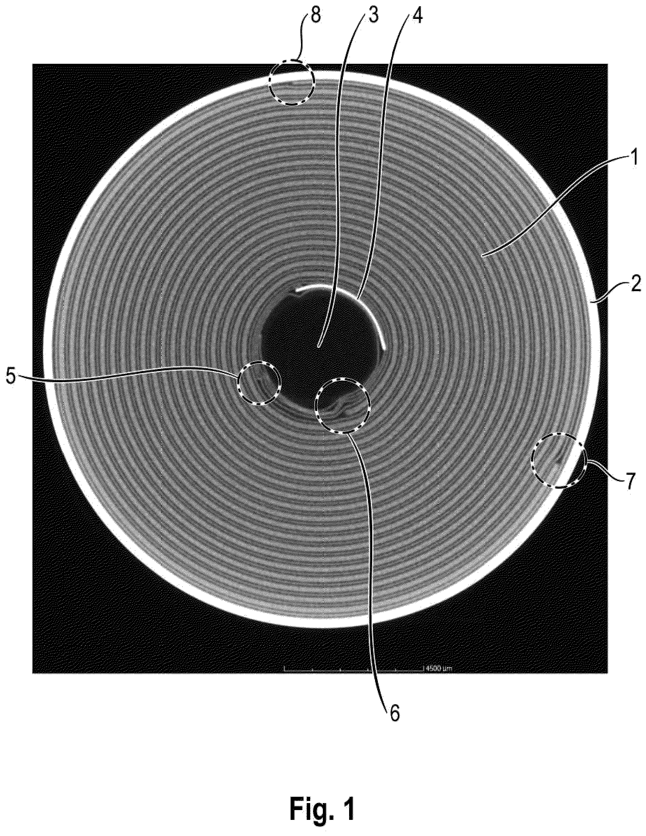

**Fig. 1** illustriert die Problematik bei herkömmlichen Energiespeicherzellen mit einem hohlzylindrisch geformten Wickelverbundkörper. Die Darstellung basiert auf einer Röntgenaufnahme, die einen Querschnitt durch eine Knopfzelle zeigt. Der dargestellte Sachverhalt findet sich jedoch gleichermaßen in zylindrischen Rundzellen. Der Wickelverbundkörper 1 wird von spiralförmig aufgewickelten Elektrodenbändern und dazwischenliegenden Separatorbändern gebildet. Der Wickelverbundkörper 1 befindet sich innerhalb eines von einem Gehäusemantel 2 eines zylindrischen Gehäuses umgrenzten Innenraums der Energiespeicherzelle. Im Zentrum 3 dieser hier gezeigten herkömmlichen Energiespeicherzelle bzw. im Zentrum des Wickelverbundkörpers 1 ist in dieser Ausgestaltung kein Wickelkern vorhanden. Über einen metallischen Leiter 4 im inneren Bereich des Wickelverbundkörpers 1 erfolgt eine elektrische Kontaktierung einer der Elektroden.

Die Schichtdicke der Separatorbänder kann beispielsweise im Bereich um 20 µm liegen. Die Schichtdicke der kathodischen Elektrodenbänder kann beispielsweise im Bereich um 150 µm liegen. Die Schichtdicke der anodischen Elektrodenbänder kann beispielsweise im Bereich um 100 µm liegen. Je nach Ausführung kann die Dicke der Separatoren beispielsweise auch bei etwa 12 µm oder 16 µm liegen. Je nach Ausführung können auch die beschichteten Elektrodenbänder in einem Bereich der Dicke von 110 µm ±15 µm liegen.

In verschiedenen Bereichen der Spiralstruktur des Wickelverbundkörpers 1 sind lokale Störstellen 5, 6, 7, 8 erkennbar, die durch verschiedene Übergangsbereiche und Enden von Elektrodenbändern bei der Herstellung des Wickelverbundkörpers 1 gebildet werden.

Bei einer Betrachtung der Spiralstruktur des Wickelverbundkörpers 1 in Fig. 1 von innen nach außen beginnt die Wicklung zunächst ausschließlich mit einigen Windungen des Anodenstromkollektors, an den der Leiter 4 geschweißt ist. Nach einigen Windungen findet sich an der als Störstelle 5 bezeichneten Position der Übergang zu einem mit einer Aktivmaterialbeschichtung beidseitig beschichteten Abschnitt des Anodenstromkollektors. An der als Störstelle 6 bezeichneten Position findet sich das innere Ende des kathodischen Elektrodenband. Im äußeren Bereich des Wickelverbundkörpers 1 befindet sich an der als Störstelle 7 bezeichneten Position das Ende des kathodischen Elektrodenbandes. An der mit Störstelle 8 bezeichneten Position befindet sich das außenliegende Ende des Anodenstromkollektors. Durch diese Störstellen 5, 6, 7, 8 in verschiedenen Bereichen der Spiralstruktur des Wickelverbundkörpers 1 kommt es zu Unregelmäßigkeiten in der näherungsweisen kreisförmigen Form der einzelnen Windungen, die sich auch auf benachbarte Windungen auswirken können.

Insbesondere im Zusammenhang mit Volumenausdehnungen und Volumenschrumpfungen bei Lade- und Entladevorgängen werden hierdurch ungleichmäßige Druckverteilungen verursacht, die sich nachteilig auf die Funktion der Energiespeicherzelle auswirken. Insbesondere kann es dadurch zu Fein- und Kurzschlüssen aufgrund einer höheren Belastung des Separators an den Unebenheiten insbesondere am Beginn der Wicklung, also im Zentrum des Wickelverbundkörpers 1, durch die Druckbelastung kommen und/oder es kann zu einer nachteiligen Lithium-Plattierung kommen.

Um diese Probleme bei Wickelverbundkörpern zu vermeiden, schlägt die Erfindung eine bestimmte Formgebung für einen Wickelkern, der sich im Zentrum des Wickelverbundkörpers befindet, vor. Mit einer solchen speziellen Formgebung des Wickelkerns können insbesondere die Probleme vermieden werden, die sich im Inneren des Wickelverbundkörpers ergeben.

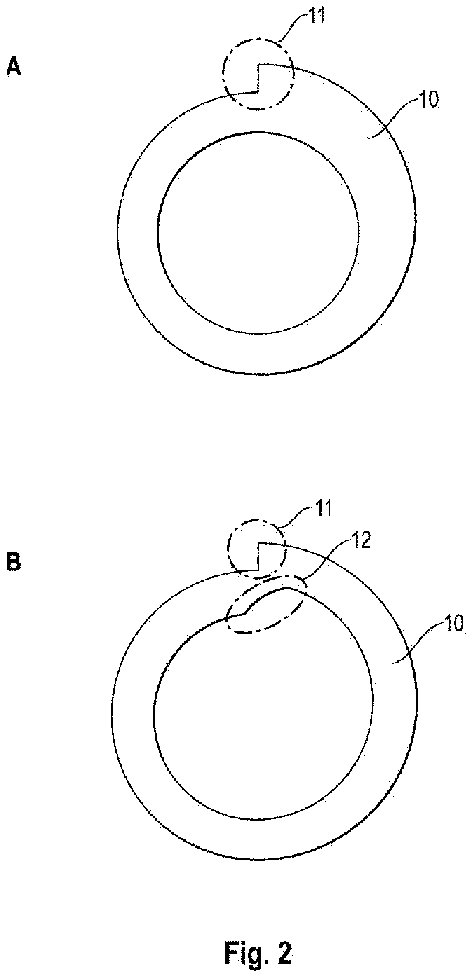

**Fig. 2** zeigt zwei mögliche Beispiele für die Formgebung des Wickelkerns 10. Der Wickelkern 10 weist in seiner Außenumfangsfläche (hier ist ein Querschnitt gezeigt) eine Abweichung 11 von einer idealen hohlzylindrischen Form des Wickelkerns auf, wobei hier in Blickrichtung von links nach rechts eine stufenweise Erweiterung des Außendurchmessers in der hier gezeigten Schnittebene realisiert ist (TeilfigurA). Gemäß der Erfindung kann die Abweichung 11 dazu genutzt, an dieser Stelle die Anbindung des Elektrodenverbundes an den Wickelkern 10 vorzunehmen, beispielsweise durch Verschweißung oder Verklebung der Separatorbänder an dieser Stelle. Durch die spezielle Formgebung des Wickelkerns 10 wird dabei vermieden, dass es bei nachfolgenden Wicklungen zu Kanten oder allgemein zu Unregelmäßigkeiten in der sich aufbauenden Spiralstruktur oberhalb des Beginns der Wicklung an der Position 11 kommt. Insgesamt wird dadurch eine deutliche Erhöhung der Homogenität des Wickels in seiner Rundheit erreicht, so dass insbesondere bei Volumenzunahmen und -abnahmen im Rahmen der Lade- und Entladevorgänge bei der Energiespeicherzelle gleichmäßige Zugkräfte wirken. Es kommt nicht zu punktuellen Druckbelastungen an Übergangsstellen, so dass die Gefahr einer Rissbildung vermieden wird. Ebenso wird eine übermäßige Belastung des Separators gerade im inneren Bereich der Spiralstruktur des Wickelverbundkörpers vermieden, so dass auch beispielsweise eine Lithium-Plattierung oder andere nachteilige Wirkungen von derartigen Unregelmäßigkeiten vermieden werden.

In Teilfigur B der Fig. 2 ist eine weitere mögliche Ausgestaltung des Wickelkerns 10 mit der Abweichung 11 im Außenumfang gezeigt, wobei in der innere Kernmantelfläche des hohlzylindrischen Wickelkerns eine Anpassung 12 in der Wandstärke vorgenommen wurde, die zu der Abweichung 11 in der Außenumfangsfläche korrespondiert. Die Abweichung 11 in Form der stufenförmigen Zunahme des Außenumfangs ist am Innenumfang in verstetigter Form als Anpassung 12 abgebildet. Die Anpassung 12 an der inneren Kernmantelfläche des Wickelkerns 10 ist also ähnlich oder korrespondierend geformt wie die Abweichung 11 an der Außenumfangsfläche des Wickelkerns 10. Dies hat den Vorteil, dass bei der Herstellung des Wickelverbundkörpers in besonders einfacher Weise eine exakte Ausrichtung zum Start der Wicklung möglich ist.

Je nach Dimensionierung der Energiespeicherzelle können die Abmessungen des Wickelkerns, der vorzugsweise aus Kunststoff hergestellt ist, angepasst werden. Beispielweise kann der Außendurchmesser des Wickelkerns für eine Knopfzelle zwischen 2 - 3 mm betragen, z. B. 2,1 mm.

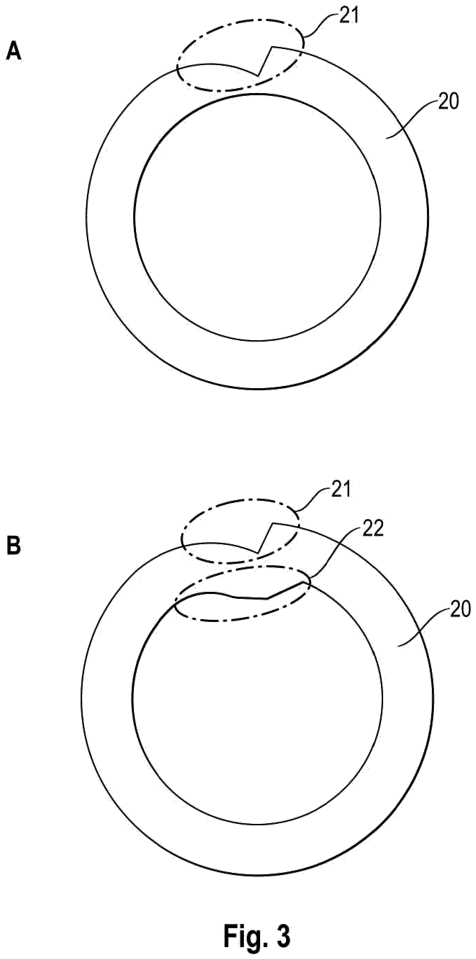

**Fig. 3** zeigt weitere Möglichkeiten zur Ausgestaltung der Form des Wickelkerns 20. Hier ist bei dem hohlzylindrisch geformten Wickelkern 20 in der Teilfigur A als Abweichung 21 eine Einkerbung vorhanden, die auf der linken Seite einen kontinuierlichen Übergang zur Wandstärke außerhalb der lokalen Abweichung 21 zeigt und die auf der rechten Seite einen stufenweisen bzw. abrupten Übergang zu der Wandstärke außerhalb der Abweichung 21 zeigt. In der als Kerbe im Außenumfang des Wickelkerns 20 ausgebildeten lokalen Abweichung 21 können beispielsweise die das Ende des Elektrodenverbundes bildenden Separatorbänder am Wickelkern 20 z. B. durch Schweißen oder Kleben befestigt werden, so dass es nicht zu einer Kantenbildung oder ähnlichen Verwerfungen kommt.

Darüber hinaus kann der Wickelkern 20 bzw. allgemein der erfindungsgemäße Wickelkern noch weitere lokale Abweichungen im Außenumfang enthalten, die weitere Übergangsbereiche bzw. Unregelmäßigkeiten in der Spiralstruktur des darauf anzubringenden Wickelverbundkörpers zu kompensieren vermögen. Insbesondere kann an solchen Störstellen, in denen besondere Dickenveränderungen durch die Elektrodenbeschichtungen stattfinden, eine entsprechende Verjüngung bzw. Einkerbung in der Außenumfangsfläche des Wickelkerns vorgesehen sein.

Die Teilfigur B der Fig. 3 zeigt eine weitere Möglichkeit der Ausgestaltung des Wickelkerns 20, wobei an der der Abweichung 21 in der Außenumfangsfläche gegenüberliegenden Position 22 in der inneren Kernmantelfläche des Wickelkerns 20 eine ähnliche Formung der inneren Kernmantelfläche realisiert ist. Hierdurch wird die Wandstärke in diesem Bereich optimiert bzw. ausgeglichen, wodurch die bereits anhand von Fig. 2 beschriebenen Vorteile erreicht werden.

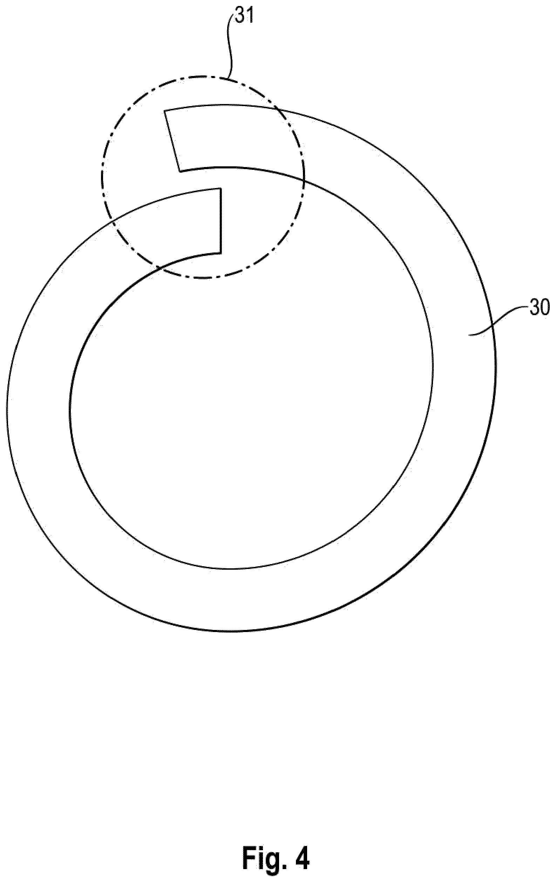

**Fig. 4** zeigt eine weitere Möglichkeit zur Ausgestaltung eines Wickelkerns 30 mit einer Abweichung 31, die unter Ausbildung eines Schlitzes durch die Wandung des hohlzylinderförmig ausgestalteten Wickelkerns 30 mit überlappenden Enden der Wandung ausgestaltet ist. Hierdurch wird eine Klemmposition bereitgestellt, mit der beispielsweise ein Ende eines Separatorbandes am Wickelkern 30 eingeklemmt werden kann, so dass keine weitergehende Befestigung, beispielsweise keine Verschweißung, erforderlich ist und zugleich eine gleichmäßige Spiralstruktur im Wickelverbundkörper erreicht werden kann.

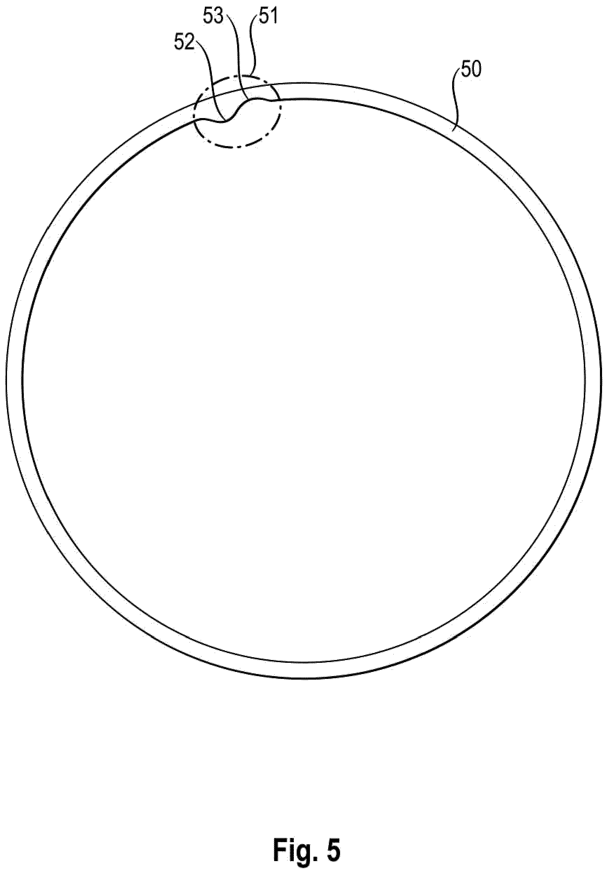

In analoger Weise zu den Abweichungen in der Außenumfangsfläche des Wickelkerns kann das den Wickelverbundkörper umgebende Gehäuse 50 mit Abweichungen in der Innenumfangsfläche ausgestaltet sein, um Unregelmäßigkeiten bzw. Störstellen im äußeren Bereich des Wickelverbundkörpers zu kompensieren. **Fig. 5** zeigt eine Abweichung51 in der inneren Gehäusemantelfläche des Gehäusemantels 50, wobei eine Wölbung 52 in Richtung des im Inneren anzuordnenden Wickelverbundkörpers mit einer Vertiefung 53, bei der die Wandstärke des Gehäusemantels 50 verringert ist, kombiniert ist. Die Vertiefung 53 kann dabei lokale Druckspitzen in Folge von ungleichmäßigen Volumenzunahmen kompensieren. Die Wölbung 52 kann eine stützende Struktur bieten, um die Spiralstruktur im Übrigen zu stabilisieren. Eine derartige Ausgestaltung als Abweichung 51 bei dem Gehäusemantel 50 kann beispielsweise zur Kompensation einer Störstelle gemäß Position 8 der Fig. 1 eingesetzt werden.

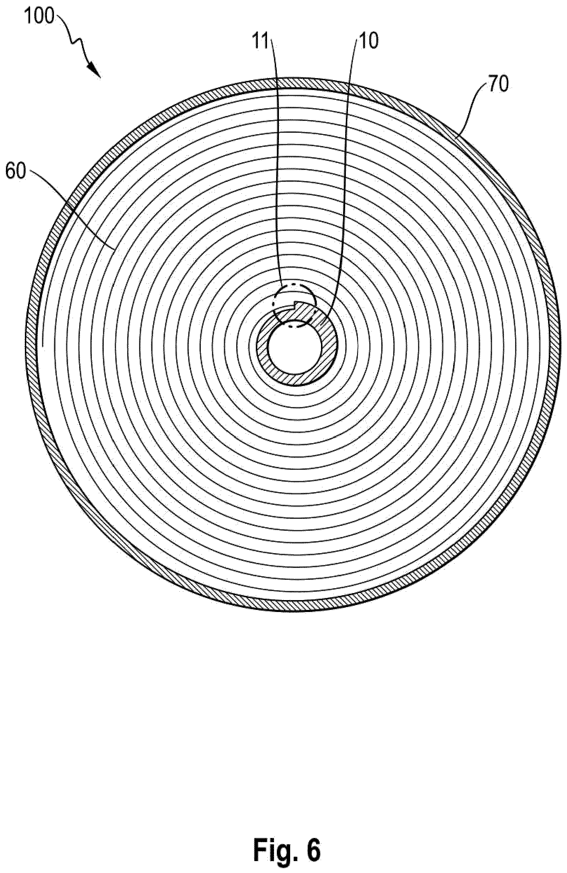

**Fig. 6** zeigt eine schematische Schnittdarstellung durch eine erfindungsgemäße elektrochemische Energiespeicherzelle 100 mit einem Wickelverbundkörper 60, der sich im Inneren eines Gehäuses 70 befindet. Im Zentrum des Wickelverbundkörpers 60 befindet sich ein Wickelkern 10, der sich durch eine Abweichung 11 in Form einer stufenförmigen Erweiterung des Außendurchmessers des Wickelkerns auszeichnet. Dieser Wickelkern 10 entspricht der in Fig. 2, Teilfigur A, gezeigten Ausgestaltung des Wickelkerns gemäß der Erfindung. Im Bereich der Abweichung 11 kann ein Ende eines Elektrodenbandes an die in der Außenumfangsfläche vorhandene Stufe angelegt werden. Hindurch können die Bildung einer Kante und in der Folge daraus resultierende Unregelmäßigkeiten in der Spiralstruktur verhindert werden.

Insgesamt zeichnet sich die erfindungsgemäße Energiespeicherzelle durch eine gleichmäßigere Wicklung des Wickelverbundkörpers aus. Dies wirkt sich positiv auf die Wickelqualität aus und führt zu einer Minimierung von Ausfällen, insbesondere in Folge von herkömmlicherweise auftretenden Kanten, die bei der erfindungsgemäßen Energiespeicherzelle wegfallen. Zudem kann in der beschriebenen Weise auch der Herstellungsprozess der Energiespeicherzelle und der Wickelprozess optimiert werden. Weiterhin ist es bei der erfindungsgemäßen Energiespeicherzelle prinzipiell möglich, mehr freies Volumen in der Energiespeicherzelle auszunutzen, wodurch sich zusätzlich ein Potential für eine Kapazitätserhöhung ergibt.

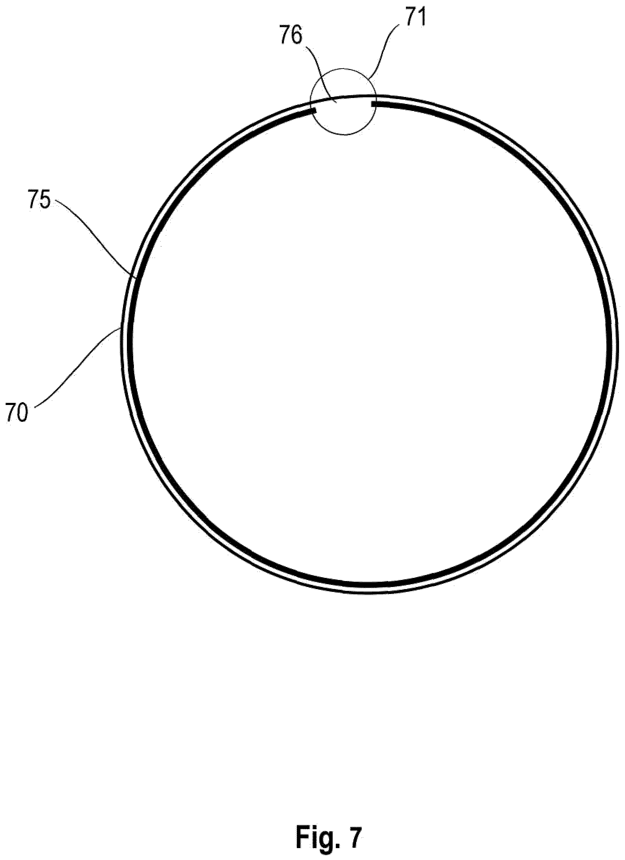

**Fig. 7** zeigt ein weiteres Beispiel, wie sich die lokale Abweichung 71 von der hohlzylindrischen Form des Gehäusemantels 70 realisieren lässt. Hierzu kann der Gehäusemantel 70 durch eine bandförmige Einlage 75 verstärkt sein, die über ihre volle Länge an der Innenseite des Gehäusemantels 70 anliegt, allerdings die Innenseite nicht vollständig bedecken kann, da sie kürzer ist als der innere Umfang des Gehäusemantels 70. Der Innendurchmesser ist in dem Abschnitt 76, in dem die bandförmige Einlage 75 die Innenseite nicht bedeckt, gegenüber allen anderen Abschnitten erweitert.

## Patentansprüche

1. Elektrochemische Energiespeicherzelle (100) mit den Merkmalen
a. die Energiespeicherzelle (100) weist ein einen Innenraum einschließendes zylindrisches Gehäuse mit einer Ober- und einer Unterseite und einem dazwischen liegenden, umlaufenden Gehäusemantel (50; 70) auf,
b. der Gehäusemantel (50; 70) weist eine innere Gehäusemantelfläche auf, die den Innenraum nach außen hin begrenzt,
c. in dem Innenraum ist ein hohlzylindrisch geformter Wickelverbundkörper (60) angeordnet, der eine spiralförmige Struktur aus mindestens zwei spiralförmig um eine Wickelachse gewickelten Elektrodenbändern und mindestens einem zwischen den Elektrodenbändern angeordneten Separatorband aufweist,
d. die Elektrodenbänder umfassen jeweils einen bandförmigen Stromkollektor mit einer beidseitigen Aktivmaterialbeschichtung,
e. der hohlzylindrisch geformte Wickelverbundkörper (60) umfasst zwei endständige Stirnseiten, eine umlaufende äußere Verbundkörpermantelfläche und eine umlaufende innere Verbundkörpermantelfläche,
f. die innere Verbundkörpermantelfläche definiert einen axial ausgerichteten Hohlraum im Zentrum des Wickelverbundkörpers (60), und
g. in dem axial ausgerichteten Hohlraum ist ein Wickelkern (10; 20; 30) mit im Wesentlichen zylindrischer oder hohlzylindrischer Form angeordnet, der über eine Außenumfangsfläche verfügt, die flächig an der inneren Verbundkörpermantelfläche anliegt,
sowie den kennzeichnenden Merkmalen
h. der Wickelkern (10; 20; 30) weist in mindestens einem Bereich der Außenumfangsfläche eine lokale Abweichung (11; 21; 31) von der zylindrischen oder hohlzylindrischen Form auf,
i. die spiralförmige Struktur des Wickelverbundkörpers umfasst mindestens eine lokale Unregelmäßigkeit in mindestens einem Bereich, in dem eines der gewickelten Elektrodenbänder endet und/oder eine plötzliche Dickenänderung eines der Elektrodenbänder auftritt und
j. der mindestens eine Bereich der Außenumfangsfläche des Wickelkerns (10; 20; 30), in dem die lokale Abweichung (11; 21; 31) von der zylindrischen oder hohlzylindrischen Form auftritt, ist einer lokalen Unregelmäßigkeit des Wickelverbundkörpers (60) räumlich zugeordnet.

2. Elektrochemische Energiespeicherzelle (100) nach Anspruch 1 mit mindestens einem derfolgenden zusätzlichen Merkmale:
a. Die lokale Abweichung (11; 21) von der zylindrischen oder hohlzylindrischen Form besteht in einer stufenförmigen oder kontinuierlichen Verringerung und/oder Erweiterung des Außendurchmessers des Wickelkerns.
b. Die lokale Abweichung (11; 21) besteht in mindestens einer stufenförmigen oder kontinuierlichen Verringerung und/oder Erweiterung desAußendurchmessers des Wickelkerns, wobei die mindestens eine stufenförmige oder kontinuierliche Verringerung und/oder Erweiterung des Außendurchmessers sich axial über die vorzugsweise gesamte Höhe des Wickelkerns erstreckt.

3. Elektrochemische Energiespeicherzelle (100) nach einem der vorhergehenden Ansprüche mit mindestens einem der folgenden zusätzlichen Merkmale:
a. Die lokale Abweichung (21) in dem mindestens einen Bereich der Außenumfangsfläche des Wickelkerns (20) besteht in einer Vertiefung in der Außenumfangsfläche des Wickelkerns und/oder einer Wölbung der Außenumfangsfläche des Wickelkerns.
b. Die lokale Abweichung (21) in mindestens einem Bereich der Außenumfangsfläche des Wickelkerns (20) besteht in einer Vertiefung in der Außenumfangsfläche des Wickelkerns und/oder einer Wölbung der Außenumfangsfläche des Wickelkerns, wobei die Vertiefung und/oder die Wölbung sich axial über die vorzugsweise gesamte Höhe des Wickelkerns erstreckt/erstrecken.

4. Elektrochemische Energiespeicherzelle (100) nach einem der vorhergehenden Ansprüche mit mindestens einem der folgenden zusätzlichen Merkmale:
a. Der Wickelkern (10; 20) ist als Hohlzylinder ausgebildet und verfügt über eine innere Kernmantelfläche, die einen axial ausgerichteten Hohlraum im Inneren des Wickelkerns begrenzt.
b. Der Wickelkern (10; 20) weist als lokale Abweichung eine Vertiefung in der Außenumfangsfläche sowie eine dazu korrespondierende, in den axial ausgerichteten Hohlraum ragende Wölbung auf.
c. Der Wickelkern (10; 20) weist als lokale Abweichung eine Wölbung der Außenumfangsfläche sowie eine dazu korrespondierende Vertiefung in der inneren Kernmantelfläche auf.

5. Elektrochemische Energiespeicherzelle (100) nach einem der vorhergehenden Ansprüche mit dem folgenden zusätzlichen Merkmal:
a. Die lokale Abweichung (31) in dem mindestens einen Bereich der Außenumfangsfläche des als Hohlzylinder ausgebildeten Wickelkerns (30) umfasst eine Durchbrechung der Wandung des Wickelkerns, insbesondere einen Schlitz in der Wandung.

6. Elektrochemische Energiespeicherzelle (100) nach einem der vorhergehenden Ansprüche mit mindestens einem der folgenden zusätzlichen Merkmale:
a. Die Außenumfangsfläche des Wickelkerns (10; 20; 30) weist eine oder mehrere Vertiefungen zur Aufnahme von mindestens einem Sensor auf.
b. Die Außenumfangsfläche des Wickelkerns (10; 20; 30) weist eine oder mehrere Vertiefungen zur Aufnahme von mindestens einem Sensor auf, wobei die Vertiefung oder die Vertiefungen sich axial über die vorzugsweise gesamte Höhe des Wickelkerns erstreckt/erstrecken.

7. Elektrochemische Energiespeicherzelle (100) nach einem der vorhergehenden Ansprüche mit mindestens einem der folgenden zusätzlichen Merkmale:
a. Der Gehäusemantel weist in eine hohlzylindrische Form auf.
b. Der Gehäusemantel weist in mindestens einem Bereich seiner inneren Gehäusemantelfläche eine lokale Abweichung (51) von der hohlzylindrischen Form auf.

8. Elektrochemische Energiespeicherzelle (100) nach Anspruch 7 mit dem folgenden zusätzlichen Merkmal:
a. Der mindestens eine Bereich der inneren Gehäusemantelfläche, der die lokale Abweichung (51) aufweist, ist einer lokalen Störstelle des Wickelverbundkörpers (60) räumlich zugeordnet.

9. Elektrochemische Energiespeicherzelle (100) nach Anspruch 7 oder Anspruch 8 mit mindestens einem der folgenden zusätzlichen Merkmale:
a. Die lokale Abweichung (51) besteht in einer stufenförmigen oder kontinuierlichen Verringerung und/oder Erweiterung des Innendurchmessers des Gehäusemantels.
b. Die lokale Abweichung (51) besteht in einer stufenförmigen oder kontinuierlichen Verringerung und/oder Erweiterung des Innendurchmessers des Gehäusemantels, wobei die stufenförmige oder kontinuierliche Verringerung und/oder Erweiterung des Innendurchmessers sich axial über die vorzugsweise gesamte Höhe des Gehäuses erstreckt/erstrecken.
c. Die lokale Abweichung (51) besteht in einer Vertiefung (53) in der inneren Gehäusemantelfläche und/oder einer Wölbung (52) der inneren Gehäusemantelfläche.
d. Die lokale Abweichung (51) besteht in einer Vertiefung (53) in der inneren Gehäusemantelfläche und/oder einer Wölbung (52) der inneren Gehäusemantelfläche, wobei die Vertiefung und/oder Wölbung sich axial über die vorzugsweise gesamte Höhe des Gehäuses erstreckt/erstrecken.

10. Elektrochemische Energiespeicherzelle (100) nach einem der vorhergehenden Ansprüche mit einem der folgenden zusätzlichen Merkmale:
a. Die elektrochemische Energiespeicherzelle ist eine zylindrische Rundzelle, oder
b. die elektrochemische Energiespeicherzelle ist eine Knopfzelle.

11. Verfahren zur Herstellung einer elektrochemischen Energiespeicherzelle nach einem der Merkmale 1 bis 10 mit den folgenden Verfahrensschritten:
a. Es werden mindestens zwei Elektrodenbänder mit jeweils einem bandförmigen Stromkollektor mit einer beidseitigen Aktivmaterialbeschichtung und mindestens einem zwischen den Elektrodenbändern angeordneten Separatorband bereitgestellt.
b. Es wird ein Wickelkern (10; 20; 30) mit einer im Wesentlichen zylindrischen oder hohlzylindrischen Form bereitgestellt, der über eine Außenumfangsfläche verfügt, wobei die Außenumfangsfläche des Wickelkerns in mindestens einem Bereich eine Abweichung (11; 21; 31) von einer zylindrischen oder hohlzylindrischen Form aufweist.
c. Zur Herstellung eines Wickelverbundkörpers (60) werden die Elektrodenbänder und das mindestens eine Separatorband unter Ausbildung einer Spiralstruktur spiralförmig um den Wickelkern (10; 20; 30) gewickelt, wobei das Wickeln derart vorgenommen wird, dass die Abweichung (11; 21; 31) einer lokalen Störstelle in der Spiralstruktur räumlich zugeordnet ist.
d. Ein zylindrisches Gehäuse (70) für die Energiespeicherzelle wird bereitgestellt.
e. Der Wickelverbundkörper (60) wird in das Gehäuse (70) eingebracht,
f. Der Wickelverbundkörper (60) wird elektrisch kontaktiert und das Gehäuse (70) geschlossen.

## Claims

1. Electrochemical energy storage cell (100) having the features
a. the energy storage cell (100) has a cylindrical housing which encloses an interior and has a top side and an underside and a circumferential housing casing (50; 70) in between,
b. the housing casing (50; 70) has an inner housing lateral surface which delimits the interior to the outside,
c. a wound composite body (60) shaped in a hollow cylindrical manner is arranged in the interior and has a helical structure comprising at least two electrode strips helically wound around a winding axis and at least one separator strip arranged between the electrode strips,
d. the electrode strips each comprise a strip-like current collector having an active material coating on both sides,
e. the wound composite body (60) shaped in a hollow cylindrical manner comprises two terminal end faces, a circumferential outer composite body lateral surface and a circumferential inner composite body lateral surface,
f. the inner composite body lateral surface defines an axially oriented cavity in the centre of the wound composite body (60), and
g. a winding core (10; 20; 30) having a substantially cylindrical or hollow cylindrical shape is arranged in the axially oriented cavity and has an outer circumferential surface which rests flat on the inner composite body lateral surface,
and the characterizing features
h. the winding core (10; 20; 30) has a local deviation (11; 21; 31) from the cylindrical or hollow cylindrical shape in at least one region of the outer circumferential surface,
i. the helical structure of the wound composite body comprises at least one local irregularity in at least one region in which one of the wound electrode strips ends and/or there is a sudden change in the thickness of one of the electrode strips, and
j. the at least one region of the outer circumferential surface of the winding core (10; 20; 30) in which the local deviation (11; 21; 31) from the cylindrical or hollow cylindrical shape occurs is spatially assigned to a local irregularity of the wound composite body (60).

2. Electrochemical energy storage cell (100) according to Claim 1 having at least one of the following additional features:
a. The local deviation (11; 21) from the cylindrical or hollow cylindrical shape involves a stepped or continuous reduction and/or expansion of the outer diameter of the winding core.
b. The local deviation (11; 21) involves at least one stepped or continuous reduction and/or expansion of the outer diameter of the winding core, wherein the at least one stepped or continuous reduction and/or expansion of the outer diameter extends axially over preferably the entire height of the winding core.

3. Electrochemical energy storage cell (100) according to either of the preceding claims having at least one of the following additional features:
a. The local deviation (21) in the at least one region of the outer circumferential surface of the winding core (20) involves a depression in the outer circumferential surface of the winding core and/or a curvature of the outer circumferential surface of the winding core.
b. The local deviation (21) in at least one region of the outer circumferential surface of the winding core (20) involves a depression in the outer circumferential surface of the winding core and/or a curvature of the outer circumferential surface of the winding core, wherein the depression and/or the curvature extend(s) axially over preferably the entire height of the winding core.

4. Electrochemical energy storage cell (100) according to any of the preceding claims having at least one of the following additional features:
a. The winding core (10; 20) is in the form of a hollow cylinder and has an inner core lateral surface which delimits an axially oriented cavity in the interior of the winding core.
b. The winding core (10; 20) has, as a local deviation, a depression in the outer circumferential surface and a corresponding curvature projecting into the axially oriented cavity.
c. The winding core (10; 20) has, as a local deviation, a curvature of the outer circumferential surface and a corresponding depression in the inner core lateral surface.

5. Electrochemical energy storage cell (100) according to any of the preceding claims having the following additional feature:
a. The local deviation (31) in the at least one region of the outer circumferential surface of the winding core (30) in the form of a hollow cylinder comprises an aperture in the wall of the winding core, in particular a slot in the wall.

6. Electrochemical energy storage cell (100) according to any of the preceding claims having at least one of the following additional features:
a. The outer circumferential surface of the winding core (10; 20; 30) has one or more depressions for accommodating at least one sensor.
b. The outer circumferential surface of the winding core (10; 20; 30) has one or more depressions for accommodating at least one sensor, wherein the depression(s) extend(s) axially over preferably the entire height of the winding core.

7. Electrochemical energy storage cell (100) according to any of the preceding claims having at least one of the following additional features:
a. The housing casing has a hollow cylindrical shape.
b. The housing casing has a local deviation (51) from the hollow cylindrical shape in at least one region of its inner housing lateral surface.

8. Electrochemical energy storage cell (100) according to Claim 7 having the following additional feature:
a. The at least one region of the inner housing lateral surface which has the local deviation (51) is spatially assigned to a local defect of the wound composite body (60).

9. Electrochemical energy storage cell (100) according to Claim 7 or Claim 8 having at least one of the following additional features:
a. The local deviation (51) involves a stepped or continuous reduction and/or expansion of the inner diameter of the housing casing.
b. The local deviation (51) involves a stepped or continuous reduction and/or expansion of the inner diameter of the housing casing, wherein the stepped or continuous reduction and/or expansion of the inner diameter extend(s) axially over preferably the entire height of the housing.
c. The local deviation (51) involves a depression (53) in the inner housing lateral surface and/or a curvature (52) of the inner housing lateral surface.
d. The local deviation (51) involves a depression (53) in the inner housing lateral surface and/or a curvature (52) of the inner housing lateral surface, wherein the depression and/or curvature extend(s) axially over preferably the entire height of the housing.

10. Electrochemical energy storage cell (100) according to any of the preceding claims having one of the following additional features:
a. The electrochemical energy storage cell is a cylindrical round cell, or
b. the electrochemical energy storage cell is a button cell.

11. Method for producing an electrochemical energy storage cell according to any of features 1 to 10 having the following method steps:
a. At least two electrodes strips each having a strip-like current collector with an active material coating on both sides and at least one separator strip arranged between the electrode strips are provided.
b. A winding core (10; 20; 30) having a substantially cylindrical or hollow cylindrical shape is provided and has an outer circumferential surface, wherein the outer circumferential surface of the winding core has a deviation (11; 21; 31) from a cylindrical or hollow cylindrical shape in at least one region.
c. In order to produce a wound composite body (60), the electrode strips and the at least one separator strip are helically wound around the winding core (10; 20; 30) so as to form a helical structure, wherein the winding is carried out in such a manner that the deviation (11; 21; 31) is spatially assigned to a local defect in the helical structure.
d. A cylindrical housing (70) for the energy storage cell is provided.
e. The wound composite body (60) is introduced into the housing (70),
f. Electrical contact is made with the wound composite body (60) and the housing (70) is closed.

## Revendications

1. Élément de stockage d'énergie (100) électrochimique, comprenant les caractéristiques suivantes
a. l'élément de stockage d'énergie (100) possède un boîtier cylindrique englobant un espace intérieur, ayant un côté supérieur et un côté inférieur et une enveloppe de boîtier (50 ; 70) périphérique située entre les deux,
b. l'enveloppe de boîtier (50 ; 70) possède une surface d'enveloppe de boîtier intérieure qui délimite l'espace intérieur par rapport à l'extérieur,
c. dans l'espace intérieur est disposé un corps composite enroulé (60) de forme cylindrique creuse, lequel présente une structure en forme de spirale constituée d'au moins deux bandes d'électrodes enroulées en forme de spirale autour d'un axe d'enroulement et d'au moins une bande de séparateur disposée entre les bandes d'électrodes,
d. les bandes d'électrodes comportent chacune un collecteur de courant en forme de bande avec un revêtement de matériau actif sur les deux côtés,
e. le corps composite enroulé (60) de forme cylindrique creuse comporte deux côtés d'extrémité, une surface d'enveloppe de corps composite extérieure périphérique et une surface d'enveloppe de corps composite intérieure périphérique,
f. la surface d'enveloppe de corps composite interne définit un espace creux orienté axialement au centre du corps composite enroulé (60), et
g. dans l'espace creux orienté axialement est disposé un noyau d'enroulement (10 ; 20 ; 30) de forme sensiblement cylindrique ou cylindrique creuse, laquelle dispose d'une surface périphérique extérieure qui repose à plat contre la surface d'enveloppe de corps composite intérieure,
ainsi que les caractéristiques caractérisantes suivantes
h. le noyau d'enroulement (10 ; 20 ; 30) possède, dans au moins une zone de la surface périphérique extérieure, une déviation locale (11 ; 21 ; 31) par rapport à la forme cylindrique ou cylindrique creuse,
i. la structure en forme de spirale du corps composite enroulé comporte au moins une irrégularité locale dans au moins une zone dans laquelle l'une des bandes d'électrodes enroulées se termine et/ou une variation soudaine de l'épaisseur de l'une des bandes d'électrodes se produit, et
j. l'au moins une zone de la surface périphérique extérieure du noyau d'enroulement (10 ; 20 ; 30), dans laquelle se produit la déviation locale (11 ; 21 ; 31) par rapport à la forme cylindrique ou cylindrique creuse, est associée spatialement à une irrégularité locale du corps composite enroulé (60).

2. Élément de stockage d'énergie (100) électrochimique selon la revendication 1, comprenant au moins l'une des caractéristiques supplémentaires suivantes :
a. la déviation locale (11 ; 21) par rapport à la forme cylindrique ou cylindrique creuse consiste en une réduction et/ou un élargissement progressif ou continu du diamètre extérieur du noyau d'enroulement,
b. la déviation locale (11 ; 21) consiste en au moins une réduction et/ou un élargissement progressif ou continu du diamètre extérieur du noyau d'enroulement, l'au moins une réduction et/ou l'au moins un élargissement progressif ou continu du diamètre extérieur s'étendant axialement sur la hauteur, de préférence totale, du noyau d'enroulement.

3. Élément de stockage d'énergie (100) électrochimique selon l'une des revendications précédentes, comprenant au moins l'une des caractéristiques supplémentaires suivantes :
a. la déviation locale (21) dans l'au moins une zone de la surface périphérique extérieure du noyau d'enroulement (20) consiste en un renfoncement dans la surface périphérique extérieure du noyau d'enroulement et/ou un bombement de la surface périphérique extérieure du noyau d'enroulement,
b. la déviation locale (21) dans au moins une zone de la surface périphérique extérieure du noyau d'enroulement (20) consiste en un renfoncement dans la surface périphérique extérieure du noyau d'enroulement et/ou un bombement de la surface périphérique extérieure du noyau d'enroulement, le renfoncement et/ou le bombement s'étendant axialement sur la hauteur, de préférence totale, du noyau d'enroulement.

4. Élément de stockage d'énergie (100) électrochimique selon l'une des revendications précédentes, comprenant au moins l'une des caractéristiques supplémentaires suivantes :
a. le noyau d'enroulement (10 ; 20) est réalisé sous la forme d'un cylindre creux et dispose d'une surface d'enveloppe de noyau intérieure qui délimite un espace creux orienté axialement à l'intérieur du noyau d'enroulement,
b. le noyau d'enroulement (10 ; 20) présente, en tant que déviation locale, un renfoncement dans la surface périphérique extérieure ainsi qu'un bombement correspondant, faisant saillie dans l'espace creux orienté axialement,
c. le noyau d'enroulement (10 ; 20) présente, en tant que déviation locale, un bombement de la surface périphérique extérieure ainsi qu'un renfoncement correspondant dans la surface d'enveloppe de noyau intérieure.

5. Élément de stockage d'énergie (100) électrochimique selon l'une des revendications précédentes, comprenant la caractéristique supplémentaire suivante :
a. la déviation locale (31) dans l'au moins une zone de la surface périphérique extérieure du noyau d'enroulement (30) réalisé sous la forme d'un cylindre creux comporte une percée dans la paroi du noyau d'enroulement, notamment une fente dans la paroi.

6. Élément de stockage d'énergie (100) électrochimique selon l'une des revendications précédentes, comprenant au moins l'une des caractéristiques supplémentaires suivantes :
a. la surface périphérique extérieure du noyau d'enroulement (10 ; 20 ; 30) possède une ou plusieurs cavités destinées à recevoir au moins un capteur,
b. la surface périphérique extérieure du noyau d'enroulement (10 ; 20 ; 30) possède un ou plusieurs renfoncements destinés à recevoir au moins un capteur, le renfoncement ou les renfoncements s'étendant axialement sur la hauteur, de préférence totale, du noyau d'enroulement.

7. Élément de stockage d'énergie (100) électrochimique selon l'une des revendications précédentes, comprenant au moins l'une des caractéristiques supplémentaires suivantes :
a. l'enveloppe de boîtier présente une forme cylindrique creuse,
b. l'enveloppe de boîtier présente, dans au moins une zone de sa surface d'enveloppe de boîtier intérieure, une déviation locale (51) par rapport à la forme cylindrique creuse.

8. Élément de stockage d'énergie (100) électrochimique selon la revendication 7, comprenant la caractéristique supplémentaire suivante :
a. un point de défaut local du corps composite enroulé (60) est associé spatialement à l'au moins une zone de la surface d'enveloppe de boîtier intérieure qui présente la déviation locale (51).

9. Élément de stockage d'énergie (100) électrochimique selon la revendication 7 ou la revendication 8, comprenant au moins l'une des caractéristiques supplémentaires suivantes :
a. la déviation locale (51) consiste en une réduction et/ou un élargissement progressif ou continu du diamètre intérieur de l'enveloppe de boîtier,
b. la déviation locale (51) consiste en une réduction et/ou un élargissement progressif ou continu du diamètre intérieur de l'enveloppe du boîtier, la réduction et/ou l'élargissement progressif ou continu du diamètre intérieur s'étendant axialement sur la hauteur, de préférence totale, du boîtier,
c. la déviation locale (51) consiste en un renfoncement (53) dans la surface d'enveloppe de boîtier intérieure et/ou un bombement (52) de la surface d'enveloppe de boîtier intérieure,
d. la déviation locale (51) consiste en renfoncement creux (53) dans la surface d'enveloppe de boîtier intérieure et/ou un bombement (52) de la surface d'enveloppe de boîtier intérieure, le renfoncement et/ou le bombement s'étendant axialement sur la hauteur, de préférence totale, du boîtier.

10. Élément de stockage d'énergie (100) électrochimique selon l'une des revendications précédentes, comprenant l'une des caractéristiques supplémentaires suivantes :
a. l'élément de stockage d'énergie électrochimique est un élément rond cylindrique, ou
b. l'élément de stockage d'énergie électrochimique est une pile bouton.

11. Procédé de fabrication d'un élément de stockage d'énergie électrochimique selon l'une des caractéristiques 1 à 10, comprenant les étapes suivantes :
a. au moins deux bandes d'électrodes comprenant chacune un collecteur de courant en forme de bande ayant un revêtement de matériau actif sur les deux côtés et au moins une bande séparatrice disposée entre les bandes d'électrodes sont fournies,
b. un noyau d'enroulement (10 ; 20 ; 30) ayant une forme sensiblement cylindrique ou cylindrique creuse est fourni, lequel dispose d'une surface périphérique extérieure, la surface périphérique extérieure du noyau d'enroulement présentant une déviation (11 ; 21 ; 31) par rapport à une forme cylindrique ou cylindrique creuse dans au moins une zone,
c. pour la fabrication d'un corps composite enroulé (60), les bandes d'électrodes et l'au moins une bande de séparateur sont enroulées en forme de spirale autour du noyau d'enroulement (10 ; 20 ; 30) en formant une structure en spirale, l'enroulement étant effectué de telle sorte qu'un point de défaut local dans la structure en spirale est associé spatialement à la déviation (11 ; 21; 31),
d. un boîtier cylindrique (70) est fourni pour l'élément de stockage d'énergie,
e. le corps composite enroulé (60) est introduit dans le boîtier (70),
f. le corps composite enroulé (60) est mis en contact électrique et le boîtier (70) est fermé.
